(19) Europäisches Patentamt / European Patent Office / Office européen des brevets

(11) **EP 3 616 910 B1**

(12) **EUROPEAN PATENT SPECIFICATION**

(45) Date of publication and mention
of the grant of the patent:
**05.03.2025 Bulletin 2025/10**

(21) Application number: **18791693.7**

(22) Date of filing: **25.04.2018**

(51) International Patent Classification (IPC):
*B29C 48/08* (2019.01)    *C08F 285/00* (2006.01)
*B29C 48/885* (2019.01)    *C08L 51/00* (2006.01)
*B29C 48/49* (2019.01)    *B29C 48/21* (2019.01)
*B29C 48/88* (2019.01)    *B32B 37/15* (2006.01)
*B32B 27/08* (2006.01)    *C08L 33/06* (2006.01)
*C08K 5/00* (2006.01)    *B32B 37/08* (2006.01)
*B32B 27/00* (2006.01)    *B32B 27/18* (2006.01)
*B32B 15/082* (2006.01)    *B32B 17/10* (2006.01)
*B32B 21/08* (2006.01)    *B32B 27/30* (2006.01)
*B32B 15/18* (2006.01)    *B32B 27/32* (2006.01)

(52) Cooperative Patent Classification (CPC):
(C-Sets available)
B29C 48/914; B29C 48/08; B29C 48/21;
B29C 48/49; B29C 48/885; B32B 15/082;
B32B 15/18; B32B 17/10577; B32B 17/10678;
B32B 17/10743; B32B 21/08; B32B 27/08;
B32B 27/18; B32B 27/302; B32B 27/304;    (Cont.)

(86) International application number:
**PCT/JP2018/016790**

(87) International publication number:
**WO 2018/199161 (01.11.2018 Gazette 2018/44)**

(54) **THERMOPLASTIC RESIN MULTILAYER FILM, METHOD FOR MANUFACTURING SAME, AND LAMINATE**

MEHRSCHICHTFOLIE AUS THERMOPLASTISCHEM HARZ, VERFAHREN ZUR HERSTELLUNG DAVON UND LAMINAT

FILM MULTICOUCHE DE RÉSINE THERMOPLASTIQUE, SON PROCÉDÉ DE FABRICATION, ET STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2017 JP 2017090728**

(43) Date of publication of application:
**04.03.2020 Bulletin 2020/10**

(73) Proprietor: **Kuraray Co., Ltd.**
**Okayama 710-0801 (JP)**

(72) Inventor: **IGUCHI, Toshiyuki**
**Tainai-shi**
**Niigata 959-2691 (JP)**

(74) Representative: **Müller-Boré & Partner Patentanwälte PartG mbB Friedenheimer Brücke 21 80639 München (DE)**

(56) References cited:
WO-A1-2010/137367    WO-A1-2010/137367
WO-A1-2011/138887    WO-A1-2011/138887
JP-A- 2007 017 555    JP-A- 2007 017 555
JP-A- 2008 030 353    JP-A- 2008 030 353
JP-A- 2008 036 849    JP-A- 2008 036 849
JP-A- 2008 093 921    JP-A- 2008 093 921
JP-A- 2009 274 255    JP-A- 2009 274 255
JP-A- 2009 298 124    JP-A- 2010 064 423
JP-A- 2010 064 423    JP-A- 2011 152 693
JP-A- 2011 152 693    JP-A- 2015 066 896

JP-A- 2015 120 295    JP-A- 2015 182 301
JP-A- 2015 182 301    JP-A- 2016 068 332
JP-A- 2016 068 332    JP-A- H0 419 141
JP-A- H0 419 141      JP-B2- 5 287 793
TW-A- 201 213 128     US-A1- 2007 144 669
US-A1- 2007 225 418   US-A1- 2008 281 023

(52) Cooperative Patent Classification (CPC): (Cont.)
**B32B 27/306; B32B 27/308; B32B 27/32;
B32B 27/34; B32B 27/36; B32B 27/365;
B32B 27/38; B32B 27/42; C08F 285/00;
C08K 5/00; C08K 5/005; C08L 33/06; C08L 51/003;**
B29C 2948/92152; B29C 2948/922;

B29C 2948/92285; B32B 37/08; B32B 37/153;
B32B 2250/03; B32B 2250/04; B32B 2250/24;
B32B 2264/0235; B32B 2264/025; B32B 2264/10;
B32B 2264/101; B32B 2264/102; B32B 2264/104;
B32B 2264/108; B32B 2307/406; B32B 2307/408;
B32B 2307/538; B32B 2307/732; B32B 2307/75;
B32B 2419/00; B32B 2451/00; B32B 2479/00;
B32B 2605/003

C-Sets
**C08F 285/00, C08F 220/14, C08F 220/1804;
C08K 5/005, C08L 51/003;
C08L 51/003, C08L 33/12, C08K 5/005**

**Description**

**Technical Field**

The present disclosure relates to a thermoplastic resin multilayer film, a printed resin film, a decorating film, a film for building materials, a laminated body, and a method of manufacturing a thermoplastic resin multilayer film.

**Background Art**

A thermoplastic resin film having a glossy external appearance with a shiny surface and a thermoplastic resin film having a matte appearance with a non-glossy surface are used for applications such as interior and exterior parts of automobiles, exterior parts of household electric appliances, exterior parts of furniture, and wall materials. Depending on the application of the film, at least one of the film surfaces of such thermoplastic resin film may be printed in order to provide a design property such as a rich impression and deepness or to provide a decorative property and bonded to another thermoplastic resin film of a different kind, a thermosetting resin film, or a metal steel plate with an adhesive layer interposed therebetween to be used as a laminated body.

As a method of creating these thermoplastic resin films, a continuous sheeting method using an extruder and a roll molding machine which are excellent in mass productivity is commonly used. Specifically, a thermoplastic resin melted and plasticized by a single screw or twin screw extruder is continuously discharged into a film shape by the T-die method, and is sandwiched between a pair of cooling rollers to be solidified to thereby obtain a film having a specified thickness or surface shape.

A thermoplastic resin film produced by such a method is used as a printed resin film, a matte resin film, a laminated resin film, a decorating film, a film for building materials, and a laminated body. However, these films deteriorates due to ultraviolet rays or the like when used for a long time. That is, a composition of a lower layer (inner layer) of the thermoplastic resin film deteriorates. The lower layer is a layer positioned at a lower part when the film is viewed from the side where it is irradiated with ultraviolet rays. **Specifically,** discoloration due to deterioration of a printing layer, peeling due to deterioration of an adhesive layer, a white turbidity due to deterioration of another laminated thermoplastic resin film, etc. occur. Further, when the thermoplastic resin film is made of a thermoplastic resin with a poor light resistance property, discoloration, cracking, surface roughness, etc. occur due to deterioration of the thermoplastic resin film itself.

**In** particular, with the recent increasing concern for reducing the environmental load, thermoplastic resin films with a high light resistance performance capable of effectively preventing the above deterioration phenomena are desired. Thermoplastic resin films with a high light resistance performance that does not cause the above deterioration in 15 to 20 years in actual use are coming to be demanded.

As a method of providing a function of a light resistance performance capable of protecting printed layer and the adhesive layer from the deterioration phenomenon by means of a thermoplastic resin film placed on a surface layer of the printed layer and the adhesive layer and also preventing the deterioration of the thermoplastic resin film itself, commonly methods such as a method of kneading an ultraviolet absorber in the thermoplastic resin film and a method of using, for example, a methacryl-based resin with high a light resistance property as the thermoplastic resin are used.

Patent Literature 1 describes a thermoplastic resin film having an improved light resistance performance by including therein a plurality of types of ultraviolet absorbers and light stabilizers.

However, in order to achieve the light resistance performance of 15 to 20 years in actual use by the method of Patent Literature 1, it is necessary to increase the content of additives such as the ultraviolet absorbers. However, these light stabilizers and antioxidants have a low molecular weight and a low melting point, so that the light stabilizers and antioxidants are likely to bleed out on the surface of the thermoplastic resin over time.

Further, in film production by extrusion melting, a heated molten resin is extruded from a discharge port of an extrusion mold, cooled by a cooling roller, and then molded. In this cooling, an additive component volatilized from the thermoplastic resin still having heat aggregates on the cooling roller having a low temperature. As described above, the surface of the cooling roller is contaminated with a volatile component, thereby impairing the transferability of the glossy surface in mirror transfer from the cooling roller to the film surface, which causes the glossiness of the film surface to be lost. Furthermore, not only the quality is deteriorated, but the product may not be produced stably in the worst case.

In order to solve these problems, there is a known method in which a plurality of extruders are included, a multilayer film composed of at least three layers is formed by the co-extrusion method, a content of an ultraviolet absorber included in thermoplastic resins constituting front and rear surface layers is reduced, and a content of an ultraviolet absorber included in a thermoplastic resin constituting an intermediate layer is increased.

Patent Literatures 2 and 3 describe a method of reducing a content of an ultraviolet absorber included in a surface layer and increasing a content of an ultraviolet absorber included in an intermediate layer to thereby effectively prevent bleeding out. Patent Literature 4 describes a multilayer acrylic resin film which is excellent in heating whitening resistance and includes high surface hardness.

Patent Literature 5 describes a multilayered film for use in heat-shrinkable packaging which can suppress transmission of ultraviolet rays by suppressing bleedout of an ultraviolet absorber and has excellent heat sealability.

Patent Literature 6 describes a novel UV-protective and weather-resistant package for surface protecting films for polyvinyl chloride window profiles made of poly(meth)acrylate. Matrix plastics having great molecular weights are used in order to obtain great weather resistance of the surface protecting films.

Patent Literature 7 describes a laminate and the preparing method thereof.

**Citation List**

**Patent Literature**

Patent Literature 1: Published Japanese Translation of PCT International Publication for Patent Application, No. 2009-520859

Patent Literature 2: Japanese Unexamined Patent Application Publication No. 2008-093921

Patent Literature 3: Japanese Unexamined Patent Application Publication No. 2012-003281

Patent Literature 4: Japanese Unexamined Patent Application Publication No. 2009-298124

Patent Literature 5: Japanese Unexamined Patent Application Publication No. 2015-066896

Patent Literature 6: US Patent Application Publication No. US 2008/281023 A1

Patent Literature 7: Taiwanese Patent Application Publication No. TW 201 213 128 A

**Summary of Invention**

**Technical Problem**

However, even the methods described in these literature have not been a sufficient way to develop a high light resistance property of 15 to 20 years or more in practical use, to effectively prevent bleeding out and dirt on the cooling roller during production, and to stably produce films.

The present disclosure has been made in view of the above circumstances. An object of the present disclosure is to provide a thermoplastic resin multilayer film, a printed resin film, a decorating film, a film for building materials, and a laminated body that are excellent in a light resistance property and that can effectively prevent bleeding out and dirt on a roller during production and a method of manufacturing a thermoplastic resin multilayer film.

**Solution to Problem**

The present invention is set out in the appended set of claims.

**Advantageous Effects of Invention**

According to the present disclosure, it is possible to provide a thermoplastic resin multilayer film which enables stable production of a film that is excellent in a light resistance property and that can effectively prevent bleeding out and dirt on a cooling roller during production and a method of manufacturing the same.

**Brief Description of Drawings**

Fig. 1 is a cross-sectional view showing a schematic configuration of a thermoplastic resin multilayer film according to the present disclosure; and

Fig. 2 is a schematic view showing an example of a film manufacturing apparatus according to the present disclosure.

**Description of Embodiments**

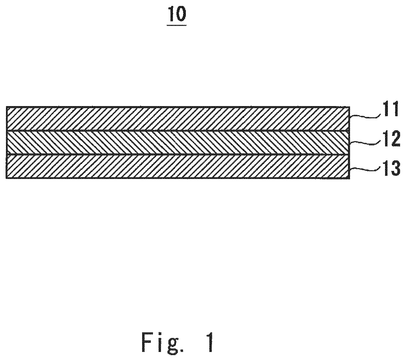

An embodiment according to the present disclosure will be described below with reference to the drawings. Fig. 1 is a cross-sectional view showing a schematic configuration of a thermoplastic resin multilayer film according to the present disclosure. In Fig. 1, a thermoplastic resin multilayer film 10 includes an outermost surface layer 11, an intermediate layer 12, and an outermost surface layer 13.

The outermost surface layer 11 is composed of a thermoplastic resin (R1) including acryl-based multilayer structure polymer particles (A). The thermoplastic resin (R1) includes 2.0 parts by mass or more and 4.0 parts by mass or less of an ultraviolet absorber with respect to 100 parts by mass of a thermoplastic resin. The intermediate layer 12 is composed of a thermoplastic resin (R2) including acryl-based multilayer structure polymer particles (A). The thermoplastic resin (R2) includes an antioxidant and a light stabilizer. Like the outermost surface layer 11, the outermost surface layer 13 is composed of the thermoplastic resin (R1) including acryl-based multilayer structure polymer particles (A). A surface roughness Ra of at least one of the outermost surface layer 11 and the outermost surface layer 13 is 0.025 μm or less. The surface roughness Ra of at least one of the outermost surface layer 11 and the outermost surface layer 13 is preferably 0.02 μm or less, and more preferably 0.015 μm or less.

With the above configuration, in the thermoplastic resin multilayer film according to the present disclosure, an antioxidant and a light stabilizer that are excellent in a light resistance property, have a low molecular weight and a low melting point, and are easy to bleed out are included in the intermediate layer to effectively prevent bleeding out of internal additives and to effectively prevent dirt on a cooling roller during production, thereby enabling stable production of films with a satisfactory glossiness appearance. Next, the details of each configuration of the thermoplastic resin multilayer film is described.

"Thermoplastic resin multilayer film"

The thermoplastic resin multilayer film according to the present disclosure is composed of a plurality of laminated thermoplastic resin layers. For example, the thermoplastic resin multilayer film may be an unstretched film or a stretched film. In the following descriptions, the term "film" means an unstretched film, unless otherwise specified.

<Acryl-Based Multilayer Structure Polymer Particles (A)>

For example, the acryl-based multilayer polymers are preferably acryl-based multilayer structure polymer particles (A). The acryl-based multilayer structure polymer particles include, as at least one inner layer (layer inner than an outermost layer), a crosslinked elastic polymer layer with a main component monomer unit of at least one of a conjugated diene-based monomer unit and an alkyl acrylate ester monomer unit including an alkyl group carbon number of 1 to 8 and, as an outermost surface layer, a thermoplastic polymer layer with a main component monomer unit of a methacrylic acid alkyl ester monomer unit including a acryl group carbon number of 1 to 8.

By including the acryl-based multilayer structure polymer particles (A) in the thermoplastic resin (R1) of the outermost surface layer 11 and the outermost surface layer 13, an impact resistance property can be improved.

In the present specification, the "main monomer unit" is, for example, a monomer unit of a component that is included in a component of the corresponding composition in an amount exceeding 50 mass%.

Further, for example, the acryl-based multilayer structure polymer particle (A) may be a so-called a core/shell structure rubber particle in which one or more inner layers including at least one crosslinked elastic polymer layer are covered with an outermost thermoplastic polymer layer.

In the acryl-based multilayer structure polymer particle (A), the molecular chain of the crosslinked elastic polymer layer constituting at least one inner layer other than the outermost layer is preferably graft-bonded to the molecular chain of a layer adjacent to the crosslinked elastic polymer layer.

As the alkyl acrylate ester including an alkyl group carbon number of 1 to 8 used in the crosslinked elastic polymer layer, for example, methyl acrylate, ethyl acrylate, butyl acrylate, 2-ethylhexyl acrylate, and propyl methacrylate are preferable. As the diene-based monomer used in the crosslinked elastic polymer layer, for example, 1,3-butadiene, isoprene or the like is preferable.

As the crosslinked elastic polymer layer, in addition to the alkyl acrylate ester including an alkyl group carbon number of 1 to 8 and conjugated diene-based monomer, a vinyl-based monomer copolymerizable with them may be used. As the copolymerizable vinyl-based monomer, for example, a methacrylate ester such as methyl methacrylate, ethyl methacrylate, butyl methacrylate, and cyclohexyl methacrylate; aromatic vinyl compounds such as styrene, p-methylstyrene, and α-methylstyrene; maleimide-based compounds such as N-propyl maleimide, N-cyclohexyl maleimide, and N-o-chlorophenyl maleimide; polyfunctional monomers such as ethylene glycol dimethacrylate, propylene glycol dimethacrylate, triethylene glycol dimethacrylate, hexanediol dimethacrylate, ethylene glycol diacrylate, propylene glycol diacrylate, triethylene glycol diacrylate, allyl methacrylate, and triallyl isocyanurate are preferable.

In the present specification, the term "polyfunctional monomer" means a monomer including two or more polymerizable functional groups.

In the thermoplastic resin multilayer film according to the present disclosure, a sum of a content of the alkyl acrylate ester unit including an alkyl group carbon number of 1 to 8 and a content of the conjugated diene-based monomer unit in the crosslinked elastic polymer layer is preferably 60 mass% or more, and more preferably 70 mass% or more. By the acryl-based multilayer structure polymer particles (A) included in the thermoplastic resin (R1) of the outermost surface layer 11 and the outermost surface layer 13 including the above-mentioned crosslinked elastic polymer layer, it is possible to improve the impact resistance property.

As the alkyl methacrylate ester including an alkyl group carbon number of 1 to 8 used for the outermost thermoplastic polymer layer in the acryl-based multilayer structure polymer particles (A), methyl methacrylate, ethyl methacrylate, propyl methacrylate, butyl methacrylate, cyclohexyl methacrylate are preferable. The content of the methacrylic acid alkyl ester monomer unit in the thermoplastic polymer layer is preferably 70 mass% or more, and more preferably 80 mass% or more. By setting the content of the alkyl methacrylate ester monomer unit in the thermoplastic polymer layer to 70 mass% or more, the dispersibility of the acryl-based multilayer structure polymer particles (A) can be improved.

The number of layers of the acryl-based multilayer polymer particles (A) is not particularly limited and may be two, three, or four or more layers. A three-layer structure of the acryl-based multilayer polymer particles (A) particularly improves the thermal stability and productivity.

The acryl-based multilayer structure polymer particles (A) preferably include three-layer structure polymer particles (AX). The three-layer structure polymer particles (AX) preferably include, from its center, first to third layers. The first layer may consist of a crosslinked polymer layer including 30 mass% or more and 98.99 mass% or less of methyl methacrylate units, 1 mass% or more and 70 mass% or less of alkyl acrylate ester units including an alkyl group carbon number of 1 to 8, and 0.01 mass% or more and 2 mass% or less of polyfunctional monomer units. The second layer may consist of a crosslinked elastic polymer layer including 70 mass% or more and 99.9 mass% or less of alkyl acrylate ester units including an alkyl group carbon number of 1 to 8, 0.1 mass% or more and 5 mass% or less of polyfunctional monomer units, and 0 mass% or more and 29.9 mass% or less of methyl methacrylate units (optional component). The third layer may consist of a hard thermoplastic resin layer including 80 mass% or more and 99 mass% or less of methyl methacrylate units and 1 mass% or more and 20 mass% or less of alkyl acrylate ester units including an alkyl group carbon number of 1 to 8. Here, AX means an example of the acryl-based multilayer structure polymer particles (A).

In the three-layer structure polymer particles (AX), the mass ratio of each layer is not particularly limited. For example, in the three-layer structure polymer particles (AX), the mass ratio of the first layer is preferably 5 mass% or more and 40 mass% or less, the mass ratio of the second layer is preferably 20 mass% or more and 55 mass% or less, and the mass ratio of the third layer (outermost layer) is preferably 40 mass% or more and 75 mass% or less.

The particle diameter of the acryl-based multilayer structure polymer particle (A) is not particularly limited. The particle diameter of the acryl-based multilayer structure polymer particle (A) is preferably 0.05 μm or more and 0.20 μm or less. When the particle diameter of the acryl-based multilayer structure polymer particle (A) is less than 0.05 μm, the handleability of the acryl-based multilayer structure polymer particles (A) tends to decrease. When the particle diameter of the acryl-based multilayer structure polymer particle (A) is greater than 0.20 μm, the thermoplastic resin film according to the present disclosure tends to be whitened when stress is applied thereto, and the transmittance tends to decrease (i.e., stress whitening tends to increase). **In** terms of stress whitening, the particle diameter of the acryl-based multilayer structure polymer particle (A) is more preferably 0.15 μm or less. By setting the particle diameter of the acryl-based multilayer structure polymer particles (A) to 0.15 μm or less, it is possible to effectively prevent the whitening when stress is applied and transmittance from decreasing.

The polymerization method of the acryl-based multilayer structure polymer particles (A) is not particularly limited. For example, emulsion polymerization method is preferable as the polymerization method. First, one kind or two or more kinds of raw material monomers are subjected to emulsion polymerization to form core particles, and then one kind or two or more kinds of other monomers are subjected to emulsion polymerization in the presence of core particles to form shells around the core particles. Then, if necessary, one kind or two or more kinds of monomers are subjected to emulsion polymerization in the presence of particles composed of cores and shells to form other shells.

Repeating such a polymerization reaction can manufacture the intended acryl-based multilayer structure polymer particles (A) as emulsified latex. In the obtained latex, usually a linear methacryl-based resin including methyl methacrylate units is present in addition to the acryl-based multilayer structure polymer particles (A).

The acryl-based multilayer structure polymer particles (A) included in the polymer latex obtained by the emulsion polymerization are granular. The particle diameter of the acryl-based multilayer structure polymer particle (A) is preferably within a range of 0.05 μm or more and 0.2 μm or less.

In the thermoplastic resins (R1) and (R2) used in the present disclosure, the content of the acryl-based multilayer structure polymer particles (A) is preferably 40 mass% or more and 80 mass% or less, more preferably 50 mass% or more and 70 mass% or less, and particularly preferably 62 mass% or more and 67 mass% or less.

Note that the content of the acryl-based multilayer structure polymer particles (A) can be calculated by the following method using acetone.

After the thermoplastic resins (R1) or (R2) is sufficiently dried to remove moisture, a mass thereof (W1) is measured. Next, this thermoplastic resin (R1) or (R2) is placed in a test tube, acetone is added and dissolved, and an acetone-soluble fraction is removed. After that, the acetone is removed using a vacuum heat dryer to obtain a residue. Next, the fine particles are separated from this residue, and then a mass of the obtained residue (W2) is measured. The content of the acryl-based multilayer structure polymer particles (A) is calculated based on the following Formula (5). [Content of acryl-based multilayer structure polymer particles

$$(A)]=(W2/W1)\times100 \; (\%) \; ... \; (5)$$

The particle diameter of the acryl-based multilayer structure polymer particle (A) in the latex including the acryl-based multilayer structure polymer particles (A) is measured by "LA-300" manufactured by Horiba, Ltd.

In the course of film manufacturing, the non-crosslinked outermost layer and the like of the acryl-based multilayer structure polymer particles (A) may melt and form a matrix. In this case, the particle diameter of the acryl-based multilayer structure polymer particle (A) in the film is smaller than the particle diameter of the polymer particles before the matrix is formed.

The particle diameter of the acryl-based multilayer structure polymer particle (A) in the film can be determined by observing the cross section by a Transmission Electron Microscope (TEM). Specifically, a part of the film is cut out, cut in a thickness direction with a microtome under freezing conditions, the obtained part is dyed with an aqueous solution of ruthenium oxide. Next, a cross section of the dyed rubber particle is observed with a TEM, and an average value of 100 particles is used as an average particle diameter.

<Methacryl-Based Resin (B)>

The thermoplastic resins (R1) and (R2) preferably further include a methacryl-based resin (B) including 80 mass% or more of methyl methacrylate units in addition to the acryl-based multilayer structure polymer particles (A). Further, the methacryl-based resin (B) may be used alone or in combination of two or more.

The methacryl-based resin (B) may include, based on the methyl methacrylate unit, 20 mass% or less of copolymerizable vinyl-based monomer units, as necessary. The vinyl-based monomer is not particularly limited, and for example, acrylate ester monomers such as methyl acrylate, ethyl acrylate, butyl acrylate, propyl acrylate, hexyl acrylate, cyclohexyl acrylate, 2-ethylhexyl acrylate, phenyl acrylate, and benzyl acrylate; methacrylate esters such as ethyl methacrylate, butyl methacrylate, propyl methacrylate, hexyl methacrylate, cyclohexyl methacrylate, phenyl methacrylate, and benzyl methacrylate; aromatic vinyl compounds such as vinyl acetate, styrene, p-methylstyrene, o-methylstyrene, m-methylstyrene, $\alpha$-methylstyrene, and vinylnaphthalene; nitriles such as acrylonitrile and methacrylonitrile; $\alpha$, $\beta$-unsaturated carboxylic acid such as acrylic acid, methacrylic acid, and crotonic acid; and maleimide compounds such as N-ethyl maleimide and N-cyclohexyl maleimide are preferable. These compounds may be used alone or in combination of two or more. The adjacent monomer units in the methacryl-based resin (B) may be cyclized and may include a ring structure such as a lactone ring, an anhydrous glutaryl ring, and an imide ring in the main chain.

The weight average molecular weight of the methacryl-based resin (B) in terms of polystyrene standard measured by gel permeation chromatography of is 50,000 or more and 200,000 or less. When the weight average molecular weight of the methacryl-based resin (B) is less than 50,000, the viscosity decreases when the methacryl-based resin (B) is melted and molded, which is not preferable. When the weight average molecular weight of the methacryl-based resin (B) exceeds 200,000, the fluidity at the time of melting and molding the thermoplastic resin (B) decreases, which is not preferable.

The amount of the methacryl-based resin (B) to be blended with 100 parts by mass of the acryl-based multilayer structure polymer particles (A) is not particularly limited. The amount of the methacryl-based resin (B) to be blended with 100 parts by mass of the acryl-based multilayer structure polymer particles (A) is preferably 1 part by mass or more and 100 parts by mass or less, more preferably 5 parts by mass or more and 70 parts by mass or less, and particularly preferably 15 parts by mass or more and 45 parts by mass or less. When the amount of the methacryl-based resin (B) to be blended exceeds 100 parts by mass, the fracture resistance property of the thermoplastic resin multilayer film according to the present disclosure tends to decrease, which is not preferable.

A commercially available product or a standard product of ISO 8257-1 may be used as the methacryl-based resin (B).

The polymerization method of the methacryl-based resin (B) is not particularly limited. Examples of the preferable polymerization method of the methacryl-based resin (B) include: an emulsion polymerization method, a suspension polymerization method, a bulk polymerization method, and a solution polymerization method.

<Ultraviolet Absorber>

The thermoplastic resin (R1) constituting the two outermost surface layers of the thermoplastic resin multilayer films includes 2.0 parts by mass or more and 4.0 parts by mass or less of an ultraviolet absorber with respect to 100 parts by mass of the thermoplastic resin. The ultraviolet absorber may be included in the thermoplastic resin (R2) constituting the intermediate layer. The ultraviolet absorber is a compound capable of absorbing ultraviolet rays. The ultraviolet absorber is a compound mainly having a function of converting light energy into heat energy. As the ultraviolet absorber, it is preferable to include at least one of, for example, benzophenones, benzotriazoles, triazines, benzoates, salicylates, cyanoacrylates, oxalic anilides, malonic esters, and formamidines. These compounds may be used alone or in combination of two or more. Among them, benzotriazoles and triazines are preferable as the ultraviolet absorber. The ultraviolet absorber preferably has a maximum value $\varepsilon_{max}$ of the molar extinction coefficient of 1200 $dm^3 \cdot mol^{-1} cm^{-1}$ or less at a wavelength of 380 to 450 nm.

Benzotriazoles are highly effective in preventing deterioration of optical properties due to coloration by UV irradiation. As the benzotriazoles, it is preferable to include at least one of, for example, 2-(2H-benzotriazol-2-yl)-4-(1, 1, 3, 3-tetramethylbutyl) phenol (product name TINUVIN 329 manufactured by BASF), 2-(2H-benzotriazol-2-yl)-4,6-bis (1-methyl-1-phenylethyl) phenol (product name: TINUVIN 234 manufactured by BASF), and 2, 2'-methylenebis [6-(2H-benzotriazol-2-yl)-4-tert-octylphenol] (LA-31 manufactured by ADEKA Corporation).

An ultraviolet absorber having a maximum value $\varepsilon_{max}$ of the molar extinction coefficient of 1200 $dm^3 \cdot mol^{-1} cm^{-1}$ or less at a wavelength of 380 to 450 nm can effectively prevent the obtained thermoplastic resin multilayer film from becoming yellowish. As such an ultraviolet absorber, for example, 2-ethyl-2'-ethoxy-oxalanilide (product name Sanduvor VSU manufactured by Clariant Japan Ltd) is preferable.

Among the above-listed ultraviolet absorbers, benzotriazoles and the like are preferably used. When the thermoplastic resin multilayer film includes benzotriazoles, it is possible to effectively prevent the resin from deteriorating due to UV irradiation.

In addition, an ultraviolet absorber of triazines is preferably included in the thermoplastic resin multilayer film when it is desired to efficiently absorb light at a wavelength around 380 nm. As such an ultraviolet absorber, it is preferable to include at least one of, for example, 2, 4, 6-tris(2-hydroxy-4-hexyloxy-3-methylphenyl)-1, 3, 5-triazine (LA-F70 manufactured by ADEKA Corporation) and hydroxyphenyltriazine-based ultraviolet absorbers (TINUVIN 477-D, TINUVIN 460, TINUVIN 479 manufactured by BASF), which are analogues thereof.

The maximum value $\varepsilon_{max}$ of the molar extinction coefficient of the ultraviolet absorber may be measured as follows. 10.00 mg of the ultraviolet absorber is added to 1 L of cyclohexane and dissolved until no undissolved substances can be observed visually. This solution is poured into a quartz glass cell of depth 1 cm× width 1 cm× height 3 cm and the absorbance at a wavelength of 380 to 450 nm is measured using a U-3410 spectrophotometer manufactured by Hitachi, Ltd. Using the molecular weight ($M_{UV}$) of the ultraviolet absorber and the maximum value ($A_{max}$) of the measured absorbance, the maximum value $\varepsilon_{max}$ of the molar extinction coefficient is calculated by Formula (6).

$$\varepsilon_{max} = [A_{max}/(10 \times 10^{-3})] \times M_{UV} \qquad \dots (6)$$

<Antioxidant>

The thermoplastic resin (R2) constituting the intermediate layer of the thermoplastic resin multilayer film includes an antioxidant. The antioxidant is for preventing the oxidative deterioration of the resin in the presence of oxygen. Examples of the preferable antioxidant include a phosphorus-based antioxidant, a hindered phenol-based antioxidant, and a thioether-based antioxidant. As the antioxidant, an antioxidant including a moiety having the effect of a phosphorus-based antioxidant and a moiety having the effect of a hindered phenol-based antioxidant in one molecule may be used. One kind or a combination of two or more kinds of the antioxidants may be used. Among them, a phosphorus-based antioxidant, a hindered phenol-based antioxidant and the like are preferable, and a combination of a phosphorus-based antioxidant and a hindered phenol-based antioxidant is more preferable. When the thermoplastic resin multilayer film includes at least one of, for example, a phosphorus-based antioxidant, a hindered phenol-based antioxidant and the like, it is possible to exert an effect of preventing deterioration of optical characteristics due to coloration. When the phosphorus-based antioxidant and the hindered phenol-based antioxidant are used in combination, the mass ratio of the amount of the phosphorus-based antioxidant used to the amount of the hindered phenol-based antioxidant used is preferably 1:5 to 2:1, and more preferably 1:2 to 1:1.

As the phosphorus-based antioxidant, it is preferable to include at least one of, for example, 2,2-methylenebis (4,6-di-t-butylphenyl) octyl phosphite (product name: ADK Stab HP-10 manufactured by ADEKA Corporation), tris(2,4-di-t-butylphenyl) phosphite (product name: IRGAFOS 168 manufactured by BASF), and 3,9-bis (2,6-di-t-butyl-4-methylphenoxy)-2,4,8,10-tetraoxa-3,9-diphosphaspiro [5.5] undecane (product name: ADK Stab PEP-36 manufactured by ADEKA Corporation).

As the hindered phenol-based antioxidant, it is preferable to include at least one of, for example, pentaerythrityl tetrakis [3-(3, 5-di-t-butyl-4-hydroxyphenyl) propionate] (product name IRGANOX 1010 manufactured by BASF or product name AO-60 manufactured by ADEKA Corporation), and octadecyl-3-(3, 5-di-t-butyl-4-hydroxyphenyl) propionate (product name: IRGANOX 1076 manufactured by BASF product name AO-50 manufactured by ADEKA Corporation).

As the antioxidant including a moiety having the effect of a phosphorus-based antioxidant and a moiety having the effect of a hindered phenol-based antioxidant in one molecule, it is preferable to include at least one of, for example, 6-[3-(3-t-butyl-4-hydroxy-5-methyl) propoxy]-2, 4, 8, 10-tetra-t-butyldibenz[d,f] [1, 3, 2]-dioxasosphepin (product name: Sumilizer GP manufactured by Sumitomo Chemical Co., Ltd.).

<Light Stabilizer>

The thermoplastic resin (R2) constituting the intermediate layer of the thermoplastic resin multilayer film includes a light stabilizer. The light stabilizer is a compound having a function of capturing radicals generated mainly by oxidation by light. As the light stabilizer, it is preferable to include at least one of, for example, hindered amines (LA-52 or LA-57 manufactured by ADEKA Corporation) (TINUVIN622SF or TINUVIN770 manufactured by BASF) such as compounds having a 2, 2, 6, 6-tetraalkylpiperidine skeleton.

The thermoplastic resin (R2) includes at least one of an antioxidant and a light stabilizer. A sum of a content of the antioxidant and a content of the light stabilizer is 0.2 parts by mass or more with respect to 100 parts by mass of the thermoplastic resin (R2). Thus, an antioxidant and a light stabilizer which easily bleed out with a low molecular weight and at a low melting point are included in the intermediate layer to effectively prevent the cooling roller from being soiled during production. In contrast, in the thermoplastic resin (R1), the sum of the content of the antioxidant and the content of the light stabilizer is preferably 0.01 parts by mass or less with respect to 100 parts by mass of the thermoplastic resin (R1). More preferably, the antioxidant and the light stabilizer are not included in the thermoplastic resin (R1).

<Matting Agent>

In the thermoplastic resin multilayer film according to the present disclosure, a matting agent may be dispersed in the thermoplastic resin (R1) to be used as the surface layer as necessary. When the matting agent is dispersed in the thermoplastic resin (R1), the thermoplastic resin multilayer film can be used as a matting film. This matting agent is fine particles commonly referred to as a matting agent or a light diffusing agent. The matting agent may be inorganic particles or organic particles. One kind or a combination of two or more kinds of the matting agents may be used.

As the matting agent, inorganic particles such as calcium carbonate, magnesium carbonate, barium sulfate, titanium oxide, magnesium oxide, zinc oxide, zirconium oxide, aluminum oxide, aluminum hydroxide, silica (silicon dioxide), calcined calcium silicate, calcined kaolin, hydrated calcium silicate, calcium silicate, aluminum silicate, magnesium silicate, calcium phosphate, glass, talc, clay, mica, carbon black, and white carbon; and resin particles such as crosslinked styrene type resin particles, high molecular weight type styrene resin particles, and crosslinked siloxane resin particles are preferable. The matting agent may be particles obtained by surface-treating the above-listed particles with a fatty acid or the like. Among the above-listed compounds, for example, mica is preferable. Mica may be either synthetic mica or natural mica.

<Optional Components>

The thermoplastic resin multilayer film according to the present disclosure may include, in addition to the above components, one kind or two or more kinds of optional components as necessary within the range not impairing the object of the present disclosure. As the optional component, various additives such as an antioxidant, a thermal degradation inhibitor, a ultraviolet absorber, a light stabilizer, a plasticizer, a lubricant, a release agent, a polymer processing aid, an antistatic agent, a flame retardant, a dye pigment, an organic dye, an impact resistance modifier, a foaming agent, a filler, and a phosphor are preferable.

The timing to add the above optional components is not particularly limited. The above optional components may be added, for example, at the time of polymerization of at least one kind of the thermoplastic resin (R1) or (R2), or added to at least one kind of the polymerized thermoplastic resin (R1) or (R2), or added at the time of kneading or after kneading at least one kind of the thermoplastic resin (R1) or (R2) and optional components as necessary.

<Thermal Degradation Inhibitor>

The thermal degradation inhibitor is capable of preventing thermal degradation of the resin by capturing polymer radicals generated when the resin is exposed to high heat under substantially oxygen-free conditions. As the thermal degradation inhibitor, it is preferable to include at least one of, for example, 2-t-butyl-6-(3'-t-butyl-5'-methylhydroxybenzyl)-4-methylphenyl acrylate (product name Sumilizer GM manufactured by Sumitomo Chemical Co., Ltd.) and 2,4-di-t-amyl-6-(3', 5'-di-t-amyl-2'-hydroxy-α-methylbenzyl) phenyl acrylate (Sumilizer GS manufactured by Sumitomo Chemical Co.,).

<Lubricant>

As the lubricant, it is preferable to include at least one of, for example, stearic acid, behenic acid, stearoamide acid, methylene bisstearamide, hydroxystearic acid triglyceride, paraffin wax, ketone wax, octyl alcohol, and hydrogenated oil. These compounds may be used alone or in combination of two or more.

<Release Agent>

As the release agent, it is preferable to include at least one of, for example, higher alcohols such as cetyl alcohol and stearyl alcohol; and glycerin higher fatty acid esters such as stearic acid monoglyceride and stearic acid diglyceride. These compounds may be used alone or in combination of two or more.
It is preferable to use higher alcohols and glycerin fatty acid monoesters in combination as a release agent. When higher alcohols and glycerin fatty acid monoesters are used in combination, the ratio of them is not particularly limited. However, the mass ratio of the amount of higher alcohols used to the amount of glycerin fatty acid monoester used is preferably within a range of 2.5:1 to 3.5:1, and more preferably within a range of 2.8:1 to 3.2:1.

<Polymer Processing Aid>

As the polymer processing aid, for example, polymer particles manufactured by the emulsion polymerization method and consist of 60 mass% or more of methyl methacrylate units and 40 mass% or less of vinyl-based monomer units that can be copolymerized with the methyl methacrylate units, having an average degree of polymerization of 3,000 or more and 40,000 or less, and having a particle diameter of 0.05 $\mu$m or more 0.5 $\mu$m or less are preferable. Such polymer particles may be single layer particles composed of polymers having a single composition and single intrinsic viscosity or may be multilayer particles composed of two or more kinds of polymers having compositions or average degrees of polymerization different from each other. Particularly preferred are two-layer particles including a polymer layer having relatively low intrinsic viscosity as an inner layer and a polymer layer having relatively high intrinsic viscosity as an outer layer. When the average degree of polymerization of the polymer processing aid is out of the above range, the film forming property may decrease. Specifically, the polymer processing aid preferably includes at least one of, for example, Metablen-P series manufactured by Mitsubishi Rayon Co., Ltd. and Pararoid series manufactured by Rohm and Haas Company, by Dow Chemical Company, and by Kureha Chemical Industry Co., Ltd. The amount of the polymer processing aid blended in the acryl-based film according to the present disclosure based on 100 parts by mass of the total amount of the thermoplastic resin is preferably 0.1 parts by mass or more and 5 parts by mass or less. When the amount of the polymer processing aid to be blended is less than 0.1 parts by mass with respect to the total amount of 100 parts by mass of the thermoplastic resin, the moldability may decrease. When the amount of the polymer processing aid to be blended is greater than 5 parts by mass with respect to the total amount of 100 parts by mass of the thermoplastic resin, the melt fluidity may decrease.

<Organic Dye>

As the organic dye, a compound having a function of converting ultraviolet rays into visible light and the like are preferably used.

<Phosphor>

As the phosphor, it is preferable to include at least one of, for example, a fluorescent pigment, a fluorescent dye, a fluorescent white dye, a fluorescent brightening agent, and a fluorescent whitening agent. These agents can be used alone or in combination of two or more.
The total amount of the above various additives is not particularly limited. The total amount of the above various additives is commonly 0.01 mass% or more and 20 mass% or less, and preferably 0.05 mass% or more and 1.5 mass% or less in 100 mass% of the thermoplastic resin multilayer film.

"Method of manufacturing a thermoplastic resin multilayer film"

The details of each component of the thermoplastic resin multilayer film have been described so far. Next, the method of manufacturing a thermoplastic resin multilayer film is described. The method of manufacturing a thermoplastic resin multilayer film according to the present disclosure includes a step of charging the thermoplastic resins (compositions) (R1) and (R2) into different extruders to be melted, a step of melting and extruding the thermoplastic resins (compositions) (R1) and (R2) from a T-die including a multi-manifold into a laminated film shape, and a step of sandwiching a melted product extruded into a film shape (hereinafter may be abbreviated as simply a "melted product") between a pair of cooling rollers, which are both metallic rigid rollers, or one is a metallic rigid roller and the other is a metallic elastic roller.

In addition, the method of manufacturing the thermoplastic resin multilayer film according to the present disclosure may use a step of melting and extruding the thermoplastic resins from a T-die including a multi-manifold into a laminated film shape by the feed block method.

<Film Molding>

As the film molding method, it is preferable to include at least one of, for example, an extrusion molding method, a solution casting method, a melt casting method, an inflation molding method, and a blow molding method. Among them, the extrusion molding method is preferable in the present disclosure. The extrusion molding method can manufacture a film having high transparency, a uniform thickness, and smooth surface with high productivity.

In the extrusion molding method, an extruder with a T-die is preferably used. The extruder with a T-die includes a raw material charging unit such as a hopper into which the raw material thermoplastic resin (composition) (R1) or (R2) is charged, a screw unit that heats and melts the charged thermoplastic resin (R1) or (R2) and sending it out to a T-die side, and a T-die that extrudes the heated and melted thermoplastic resin (R1) or (R2) into a multilayer film shape.

In the extruder with the T-die, it is preferable that a fixed amount of the molten resin be supplied to the T-die using a gear pump. By using a gear pump, a fixed amount of the molten resin can be supplied to the T-die, which enables thermoplastic resin multilayer films with high accuracy in the thickness to be manufactured.

It is preferable that after impurities of the molten resin are removed by filtration using a polymer filter or the like, the molten resin be supplied to the T-die. The set temperature of the extruder with the T-die is not particularly limited. The set temperature of the extruder with the T-die is set according to the composition of the thermoplastic resin (composition) (R1) or (R2), preferably 160 °C or higher and 270 °C or lower, and more preferably 220 °C or higher and 260 °C or lower. The set temperature of the extruder with the T-die is desirably the melting temperature (processing temperature) of the thermoplastic resin (composition) (R1) or (R2) or higher.

The thermoplastic resin (composition) (R1) or (R2) melted at the above set temperature is extruded vertically downward (i.e., gravity direction) into a film shape from a discharge port of the T-die. The temperature distribution of the T-die is preferably ±15 °C or lower (e.g., a difference between an upper limit temperature and a lower limit temperature is 30 °C or lower), more preferably ±5 °C or lower, and particularly preferably ±1 °C or lower. When the temperature distribution of the T-die exceeds ±15 °C, viscosity of the molten resin becomes uneven, and the obtained thermoplastic resin multilayer film may be, for example, distorted due to uneven thickness and uneven stress. Therefore, by setting the temperature distribution of the T-die to ± 15 °C, it is possible to effectively prevent an occurrence of distortion due to uneven thickness and uneven stress in the manufactured thermoplastic resin multilayer film.

As the method of cooling the melted product extruded from the T-die, it is preferable to include at least one of, for example, a nip roller method, an electrostatic application method, an air knife method, a calendaring method, a single-sided belt method, a double-sided belt method, and a triple roller method. In the present disclosure, the nip roller method is preferable.

In the nip roll method, the melted product extruded from the T-die is cooled by a cooling roller unit. The cooling roller unit includes a plurality of cooling rollers (nip rollers) disposed adjacent to each other with a space having a distance corresponding to a desired thickness of the thermoplastic resin multilayer film apart from each other.

Hereinafter, in the cooling roller unit, the n-th (n is an integer of one or more) cooling roller from the upstream side is referred to as an "nth cooling roller". The cooling roller unit includes at least a first cooling roller and a second cooling roller having a separated space therebetween below the discharge port of the T-die. The number of cooling rollers is two or more, preferably three to four.

The melted product extruded from the T-die is sandwiched between the first cooling roller and the second cooling roller and is pressurized and cooled to become a thermoplastic resin multilayer film. The thermoplastic resin multilayer film is not sufficiently cooled by the cooling roller unit alone, and the thermoplastic resin multilayer film is not usually completely solidified even at the time of being separated from the most downstream cooling roller. After being separated from the most downstream cooling roller, the thermoplastic resin multilayer film is further cooled while flowing down.

In particular, in the present disclosure, it is desirable not to leave a gap between the melted product and both of the cooling rollers at the moment of sandwiching the melted product between the first cooling roller and the second cooling roller. By not providing a gap between the melted product and both of the cooling rollers, it is possible to exert an effect of effectively preventing a volatile component from the melted product from aggregating and accumulating on the surfaces of the rollers and an effect that the rollers are not soiled even when a relatively large amount of an additive such as an ultraviolet absorber for improving light resistance performance is included.

In the present disclosure, it is preferable that both of the first cooling roller and the second cooling roller be metallic rigid rollers, or one be a metallic rigid roller and the other be a metallic elastic roller.

The metallic rigid rollers are highly rigid metallic rollers that do not deform even when the melted product is pressurized while the film is being manufactured. The surface of the metallic rigid roller is smooth, preferably a mirror surface. A metallic rigid roller commonly used in extrusion molding is used as the metallic rigid roller. As the metallic rigid roller, for example, it is preferable to use a double metallic rigid roller including an inner roller composed of a metallic hollow roller such as a drilled roller or a spiral roller and a metallic outer tube having a smooth surface. In this metallic rigid roller, a cooling fluid flows downward between at least one of inside the inner roller and between the inner roller and the outer tube. The outer tube is preferably thick enough so that it is not deformed even when the melted product is pressurized while the film is being manufactured. The thickness of the outer tube is, for example, about 20 mm. Materials for the inner roller and the outer tube are not particularly limited. Preferably, the material of the inner roller and the outer tube includes at least one of, for example, stainless steel and chrome steel.

The metallic elastic roller is a metallic roller having a surface that is elastically deformable while the film is being manufactured. The surface of the metallic elastic roller is smooth, preferably a mirror surface. A metallic elastic roller that has been commonly used in extrusion molding can be used as the metallic elastic roller. As the metallic elastic roller, for example, a double metallic elastic roller including an inner roller composed of a metallic hollow roller and a metallic outer tube having a surface that is smooth and is elastically deformable while the film is being manufactured may be used. In this metallic elastic roller, a cooling fluid flows downward between at least one of inside the inner roller and between the inner roller and the outer tube. Rubber or any fluid not for a cooling purpose may be disposed between the inner roller and the outer tube. The outer tube is preferably thin enough so that it can be elastically deformed without being broken while the film is being manufactured and is, for example, about 2 mm or more and 8 mm or less. It is preferable that the outer tube have a seamless structure without a welded joint. Materials for the inner roller and the outer tube are not particularly limited. Preferably, the material of the inner roller and the outer tube includes at least one of, for example, stainless steel and chrome steel.

When two metallic rigid rollers are used, the outer tubes of the rollers are not deformed and come into point contact with the melted product when viewed in cross section. In contrast, the metallic elastic roller is elastically deformed along with the melted product that is being pressed. Therefore, when at least one metallic elastic roller is used, the length of the metallic elastic roller contacting with the melted product is relatively long when viewed in cross section, and the metallic elastic roller can be in line contact with the melted product, thereby enabling the melted product to be pressurized with more uniform linear pressure. Then, no air layer is included between the cooling rollers and the melted product, which eliminates the accumulation caused by the aggregation of volatile matters on the surface of the rollers, which has been described above, thereby effectively preventing the rollers from being soiled.

By sandwiching the melted product between the first cooling roller and the second cooling roller, the film forming property of the film improves because it is possible to pressurize the film while cooling the film from both surfaces of the film, which improves the film forming property of the film and effectively prevents the thicknesses of the film from becoming uneven and streaks from occurring. The thickness of the film can be reduced as well.

Further, when the metallic rigid rollers or the metallic elastic rollers having smooth or, preferably, mirror surfaces are used as the first cooling roller and second cooling roller for sandwiching the melted product, at least one film surface can be highly glossy at an ordinary temperature and can have favorable printability. Basically, it is possible to make both the film surfaces highly glossy at an ordinary temperature and have favorable printability.

Note that a metallic rigid roller or a metallic elastic roller can have a highly glossy film surface than a non-metal roller such as a rubber roller having a low surface smoothness.

In the manufacturing method according to the present disclosure, metallic rigid rollers can be used for both the first cooling roller and second cooling roller. One of the cooling roller (first cooling roller or second cooling roller) may be a metallic elastic roller. When the metallic elastic roller is used, the length of the metallic elastic roller contacting with the melted product is relatively long when viewed in cross section, and thus the melted product can be pressurized with more uniform linear pressure. Accordingly, at least one of, for example, the effect of reducing the residual stress in the film and the effect of thinning the film are achieved.

When a metallic elastic roller is used, a roller that supports the melted product from a side opposite the side supported by a metallic elastic roller when viewed in cross section is desirably a metallic rigid roller. That is, in the present disclosure, it is particularly preferable to use a metallic rigid roller for one of the first cooling roller and second cooling roller and a metallic elastic roller for the other one of them.

It is preferable that at least one of the first cooling roller and second cooling roller have outer diameters of both end parts of the roller being somewhat smaller than the outer diameter of the central part of the roller. In this case, a step between both end parts of the roller and the central part of the roller formed on an outer peripheral surface is preferably 0.5 mm or more and 1.0 mm or less. When the step is formed on the outer peripheral surface of at least one of the cooling rollers, both end parts of the film can be slightly thicker than the central parts of the film, thereby effectively preventing the film from breaking and thus the productivity from decreasing. The shape of the step is not particularly limited, and may be any of a vertical shape, a tapered shape, and a stepped shape. Both end parts of the film, which are slightly thicker than the central part of the film, can be cut and removed in a later step, if necessary.

The linear pressure applied to the melted product by the first cooling roller and second cooling roller is preferably 10 kg/cm or more, more preferably 20 kg/cm or more, and particularly preferably 30 kg/cm more. By setting this linear pressure to 10 kg/cm or more, it is possible to uniformly pressurize the melted product, effectively prevent an air layer from being included between the cooling rollers and the melted product, and to effectively prevent the accumulation of the volatile matters on the cooling rollers. The upper limit of the linear pressure applied to the melted product by the first cooling roller and second cooling roller is not particularly limited. By setting the upper limit of the linear pressure to about 50 kg/cm, it is possible to elastically deform the cooling rollers and prevent the film from breaking.

When the matting film is manufactured, after the thermoplastic resin composition in which the matting agent is dispersed is melted and extruded, the melted product is sandwiched between a pair of cooling rollers (first cooling roller and second cooling roller), in which both of the cooling rollers are metallic rigid rollers or one of them is a metallic rigid roller and the other is a metallic elastic roller.

This method can manufacture a thermoplastic resin multilayer film in which the adhesion of the melted product to the cooling rollers and the releasability of the melted product from the pair of cooling rollers are favorable, which can effectively prevent the matting agent from protruding from the film surface, and in which at least one of the film surfaces is highly glossy and has excellent printability when the film is being manufactured.

The smaller the difference between the surface temperature of the cooling roller and the glass transition temperature (Tg) of the thermoplastic resin (composition) (R1), the stronger the adhesion of the melted product to the cooling roller becomes, which improves the surface smoothness and the surface glossiness of the obtained thermoplastic resin multilayer film, effectively prevents an air layer from being included between the above-described cooling rollers and the melted product, and effectively prevents the accumulation of the volatile matters on the cooling rollers, which have been described above.

In the manufacturing method according to the present disclosure, the following Formulas (3) and (4) are preferably satisfied, where T1 is the surface temperature of the first cooling roller that is located at an upstream side between the first and second cooling rollers, T2 is the surface temperature of the second cooling roller that is located after the first cooling roller at the upstream side between first and second cooling rollers, and TgR1 is the glass transition temperature (Tg) of the thermoplastic resin (composition) (R1).

$$T2 \geq T1 \qquad \ldots (3)$$

$$10 \leq |TgR1 - T2| \leq 40 \qquad \ldots (4)$$

TgR1 of the thermoplastic resin (composition) (R1) suitable for use in the present disclosure is preferably 70 °C or higher and 125 °C or lower, and more preferably 90 °C or higher and 110 °C or lower. T2 is preferably 60 °C or higher and 90 °C or less, and more preferably 70 °C or higher and 80 °C or lower. When T2 is 60 °C or higher and 90 °C or lower, the balance between the surface smoothness and surface glossiness of the thermoplastic resin multilayer film and the releasability of the melted product from the cooling rollers becomes favorable.

Since the thermoplastic resin laminated film is sufficiently pressurized and cooled by the first cooling roller and the second cooling roller, when the cooling roller unit includes third and subsequent cooling rollers, the material thereof is not particularly limited. Metallic rigid rollers are preferable as the third and subsequent cooling rollers.

Further, when the cooling roller unit includes the third and subsequent cooling rollers, the surface temperature of the cooling roller unit is not particularly limited. The surface temperature of the third and subsequent cooling rollers is preferably 50 °C or higher and 90 °C or lower, and more preferably 60 °C or higher and 80 °C or lower.

"Film Manufacturing Apparatus"

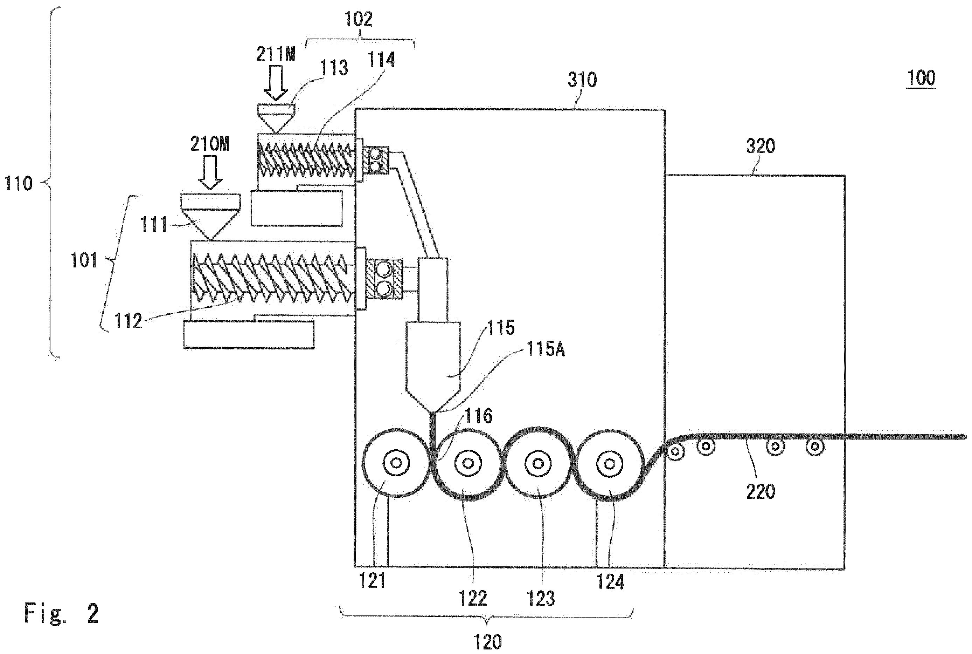

Next, an embodiment of a film manufacturing apparatus by an extrusion molding method will be described with reference to Fig. 2.

Fig. 2 is a schematic diagram of the film manufacturing apparatus according to the present disclosure. In Fig. 2, a film manufacturing apparatus 100 includes an extruder 101, an extruder 102, and extrusion molding means 110.

The extruder 101 heats and melts a raw material resin (composition) 210M (resin (composition) (R1)). The extruder 102 heats and melts a raw material resin (composition) 211M (resin (composition) (R2)). The extrusion molding means 110 extrudes the raw materials into a laminated film shape.

The extrusion molding means 110 includes a raw material charging unit 111, a screw unit 112, a raw material charging unit 113, a screw unit 114, and a T-die 115. For example, the extrusion molding means 110 is preferably an extruder with a T-die.

The raw material charging unit 111 is a hopper or the like into which the raw material resin (composition) 210M is charged. The screw unit 112 heats and melts the resin (composition) 210M and extrudes it. The raw material charging unit 113 is a hopper or the like into which the resin (composition) 211M is charged. The screw unit 114 heats and melts the resin (composition) 211M and extrudes it. The T-die 115 includes a discharge port 115A for discharging the heated and melted resin (composition) 210M and resin (composition) 211M into a laminated film shape.

The film manufacturing apparatus 100 further includes a cooling roller unit 120 that is composed of a plurality of cooling rollers. The cooling rollers are disposed adjacent to each other with a separated space having a separated distance corresponding to a desired thickness of the resin film 220 apart from each. The cooling rollers cool the melted product extruded by the extrusion molding means with the T-die 110 while pressurizing it. The cooling roller unit 120 includes at least a first cooling roller 121 and a second cooling roller 122 which have the separated space therebetween below the discharge port 115A of the T-die 115.

The melted product extruded from the T-die 115 is sandwiched between the first cooling roller 121 and the second cooling roller 122 in a space 116 between the first cooling roller 121 and the second cooling roller 122, pressurized and cooled, and becomes a resin film 220. At this point, the resin film 220 is not sufficiently cooled and is not completely solidified.

The cooling roller unit 120 includes the first cooling roller 121, the second cooling roller 122, a third cooling roller 123, and a fourth cooling roller 124. The melted product extruded from the T-die 115 is sent to the space 116 between the first cooling roller 121 and the second cooling roller 122. Then, the melted product is sandwiched between the first cooling roller 121 and the second cooling roller 122. After that, the melted product obtained by being pressurized and cooled is separated from the first cooling roller 121 and further cooled while passing over the surface of the second cooling roller 122, supplied between the second cooling roller 122 and the third cooling roller 123, and then pressurized. The resin film 220 gradually formed from the melted product is separated from the second cooling roller 122 and further cooled while passing over the surface of the third cooling roller 123, supplied between the third cooling roller 123 and the fourth cooling roller 124, and then pressurized. The resin film 220 is then separated from the third cooling roller 123 and is cooled while passing over the surface of the fourth cooling roller 124. After that, the resin film 220 is separated from the fourth cooling roller 124, and the process proceeds to the next step. At this point, the resin film 220 is not sufficiently cooled and is not completely solidified.

The T-die 115 and the cooling roller unit 120 of the extrusion molding means 110 are disposed inside a first manufacturing room 310. The ambient temperature in the first manufacturing room 310 does not have to be particularly adjusted. The ambient temperature in the first manufacturing room 310 is, for example, about 35 °C or higher and 40 °C or lower, which is higher than an ordinary temperature (20 °C or higher and 25 °C or lower) due to the presence of the heated and melted resin.

A second manufacturing room 320 is provided adjacent to the first manufacturing room 310. An ambient temperature in the second manufacturing room 320 is preferably adjusted within a range of 20 °C or higher and 50 °C or lower. By setting the ambient temperature within the range of 20 °C or higher and 50 °C or lower, it is possible to gradually cool the resin film 220 which has been obtained by being pressurized and cooled by the cooling roller unit 230. The ambient temperature in the second manufacturing room 320 can be adjusted using air-conditioning equipment or the like.

The film manufacturing apparatus 100 may include stretching means for stretching the resin film 220. The film manufacturing apparatus 100 may include protective film attaching means for attaching a protective film to at least one of the film surfaces of the manufactured resin film 220. The film manufacturing apparatus 100 may include a take-up roller for taking up the manufactured resin film 220.

The thickness of the unstretched thermoplastic resin multilayer film manufactured by the above manufacturing method is not particularly limited. The thickness of the unstretched thermoplastic resin multilayer film is preferably 15 $\mu$m or more and 250 $\mu$m or less, more preferably 15 $\mu$m or more and 200 $\mu$m or less, and further more preferably 20 $\mu$m or more and 80 $\mu$m or less. The thickness of the outermost surface layer is preferably 5 $\mu$m or more and 50 $\mu$m or less. Commonly, the thinner the film is, the lower the ultraviolet absorption ability becomes, which reduces the effect of protecting a substrate positioned below the film when the film and the substrate constitute a laminated body from deteriorating. In contrast, in the thermoplastic resin laminated film according to the present disclosure, bleeding out hardly occurs even when a large amount of a light stabilizer is added. For this reason, the thermoplastic resin laminated film according to the present disclosure can have a high light resistance property even when the film thickness is reduced.

The thermoplastic resin multilayer film according to the present disclosure may be a stretched film. That is, the above-mentioned unstretched film may be stretched so that it becomes a stretched film. The stretching treatment increases the mechanical strength and achieves a film that is difficult to crack. The stretching method is not particularly limited. The stretching method preferably includes at least one of, for example, a simultaneous biaxial stretching method, a sequential biaxial stretching method, and a tubular stretching method. The lower limit of the stretching temperature is preferably 10 °C higher than the glass transition temperature (Tg) of the thermoplastic resins (R1) and (R2), and the upper limit of the stretching temperature is preferably 40 °C or higher than the glass transition temperature (Tg) of the thermoplastic resins (R1) and (R2). By setting the lower limit of the stretching temperature to the temperature 10 °C higher than the glass transition temperature (Tg) of the thermoplastic resins (R1) and (R2), it is possible to uniformly stretch the film, thereby achieving a film with high strength.

"Printed resin film"

At least one of the film surfaces of the thermoplastic resin multilayer film may be printed (in the present specification, the thermoplastic resin multilayer film including a printed surface may be referred to as a "printed resin film". Usually, one of the film surfaces of the above-described thermoplastic resin multilayer film is printed. Since at least one of the film surfaces of the thermoplastic resin multilayer film is highly glossy at an ordinary temperature, when the highly glossy film surface is printed, it is possible to achieve a printed resin film with a reduced number of unprinted parts and a favorable print appearance.

As described above, the above-described method of manufacturing a thermoplastic resin multilayer film can manufacture a thermoplastic resin multilayer film in which both film surfaces are highly glossy. When the glossiness ($G_L$ values) of both film surfaces differ from each other, it is preferable to print the surface with a higher $G_L$ value, because the quality of the printing can be higher on the surface with a higher $G_L$ value. Hereinafter, the film surface with a higher glossiness than that of the other film surface is referred to as a glossy surface.

As the printing method, for example, a gravure printing method, a flexographic printing method, and a silk screen printing method can be used.

When the printed resin film is laminated on a substrate, it is preferable to laminate the film in such a way that the printed surface comes into contact with the substrate, because this will provide protection and a rich impression to the printed surface.

"Matte resin film"

In the thermoplastic resin multilayer film, a matting agent may be blended in the thermoplastic resin constituting at least one of the film surfaces (in the present specification, the thermoplastic resin multilayer film including the matting agent in its outermost surface layer may be referred to as a "matte resin film"). By using the thermoplastic resin multilayer film according to the present disclosure, it is possible to provide a matte resin film with a reduced number of unprinted parts, a favorable print appearance, and a favorable matte appearance.

"Laminated film"

Since the above thermoplastic resin multilayer film according to the present disclosure, the above printed resin film according to the present disclosure, or the above matte resin film according to the present disclosure is excellent in adhering to any thermoplastic resin (composition), at least one layer of a thermoplastic resin layer having a resin composition different from that of another thermoplastic resin layer can be laminated on at least one of the film surfaces of the other thermoplastic resin layer (in the present specification, the thermoplastic resin multilayer film on which another thermoplastic resin film is laminated may be referred to as a "laminated film").

The method of manufacturing the laminated film is not particularly limited.

There are following preferable methods of manufacturing the laminated film including the thermoplastic resin multilayer film according to the present disclosure.

(1) A method of manufacturing a laminated film by melting and coextruding the raw material resins (compositions) (R1) and (R2) of the above thermoplastic resin multilayer film according to the present disclosure and another thermoplastic resin (composition).

(2) A method of manufacturing a laminated film by obtaining, in advance, a film from one of the raw material resins (compositions) (R1) and (R2) of the above thermoplastic resin multilayer film according to the present disclosure and another thermoplastic resin (composition), and then melting, extruding, and covering the other thermoplastic resin (composition) over the obtained film.

(3) A method of obtaining, in advance, films from both the raw material resins (compositions) (R1) and (R2) of the above thermoplastic resin multilayer film according to the present disclosure and another thermoplastic resin (composition), and thermocompressing them.

(4) A method of manufacturing a laminated film by obtaining, in advance, a film from the raw material resins (compositions) (R1) and (R2) of the thermoplastic resin multilayer film according to the present disclosure and polymerizing a polymerizable composition on the obtained film.

When an exposed surface of the thermoplastic resin multilayer film according to the present disclosure obtained by any one of the above-listed methods (1) to (4) is printed, the thermoplastic resin multilayer film including the above printed resin film according to the present disclosure can be obtained.

The thermoplastic resins suitable for the lamination other than those mentioned above are not particularly limited, and it is preferable to include at least one of, for example, a carbonate-based polymer, a vinyl chloride-based polymer, a vinylidene fluoride-based polymer, a (meth)acryl-based resin, a polyester resin, an ABS-based resin, an AES-based resin, and an AS-based resin. These compounds may be used alone or in combination of two or more.

Various functional layers can be provided on at least one of the film surfaces of the above thermoplastic resin multilayer film according to the present disclosure or the above laminated film. As the functional layer, it is preferable to include at least one of, for example, a hard coat layer, an antiglare layer, an antireflection layer, an antisticking layer, a diffusion layer, an antiglare layer, an antistatic layer, an antifouling layer, and an easy slippable layer including fine particles.

"Laminated Body"

In the laminated body according to the present disclosure, the above thermoplastic resin multilayer film according to the present disclosure, the above printed resin film according to the present disclosure, the above laminated resin film according to the present disclosure, or the above matte resin film according to the present disclosure is laminated on a substrate. By laminating the above thermoplastic resin multilayer film on the substrate, the design property of the substrate can be improved. In addition, the effect of protecting the substrate can be achieved.

The material of the substrate is not particularly limited, and it is preferable to include at least one of, for example, a resin, a steel material, wood, glass, and composite materials thereof. The resin used for the substrate is not particularly limited, and for example, a thermoplastic resin or a thermosetting resin are preferable. As the thermoplastic resin used for the substrate, it is preferable to include at least one of, for example, carbonate-based resins, ethylene terephthalate-based resins, amide-based resin, olefin-based resins, styrene-based resins, vinyl chloride-based resins, (meth)acryl-based resins, and ABS-based resins. Examples of the preferable thermosetting resin used for the substrate include epoxy-based resins, phenol-based resins, and melamine-based resins.

The method of manufacturing the laminated body according to the present disclosure is not particularly limited, and it is preferable to include at least one of adhesion, lamination, insert molding, and in-mold molding.

When the material of the substrate is a resin, the thermoplastic resin multilayer film according to the present disclosure, the printed resin film according to the present disclosure, or the laminated resin film according to the present disclosure is preferably vacuum molded, compressed air molded, or compressed and molded on the surface of the substrate while it is being heated. Among them, the injection molding simultaneous lamination method is particularly preferable. In the injection molding simultaneous lamination method, the thermoplastic resin multilayer film according to the present disclosure, the printed resin film according to the present disclosure, or the laminated resin film according to the present disclosure is inserted between a pair of female and male molds for injection molding, and then the melted thermoplastic resin is injected and molded inside the molds (on one surface of the film). **In** this method, the film can be laminated at the same time that the injection molded body is manufactured.

The thermoplastic resin multilayer film to be inserted into the molds may be flat, or may include depressions and projections that are obtained by preforming the film by vacuum molding, pressure molding or the like. The preforming of the film may be carried out by a separate molding machine or in a metal mold of an injection molding machine used in the injection molding simultaneous lamination method. A method of preforming the film and then injecting the molten resin on one side of the film is referred to as an insert molding method.

When the material of the substrate is a resin, a method of coextruding and molding the substrate and the film to be laminated may be incorporated.

Further, a coating layer obtained by being cured by irradiation with ultraviolet rays (UV) or electron beams (EB) may be provided on the film according to the present disclosure combined with a substrate. By providing a coating layer, it is possible to further improve the design property or the protection of the substrate.

"Application"

The thermoplastic resin multilayer film according to the present disclosure, the printed resin film according to the present disclosure, the matte resin film according to the present disclosure, the laminated resin film according to the present disclosure, and the laminated body according to the present disclosure can be used for any purpose, may be preferably used for various purposes such as a decorating film and a film for building materials which requires a design property.

Examples of suitable applications include interior parts such as furniture, pendant lights, and mirrors; building materials such as doors, sash windows, domes, safety windowpanes, partitions, staircases waistcoats, balcony waistcoats, and building parts for roofs and the like of the buildings for leisure; or automobile parts.

Examples of other applications include signboard parts or marking films such as advertisement towers, floor stand signboards, side signboards, transom signboard, or roof signs; display parts such as showcases, dividers, or store displays; lighting components such as fluorescent lamp covers, mood lighting covers, lamp shades, light ceilings, light walls, or chandeliers; transport aircraft related components such as aircraft windshields, pilot visors, motorcycle windshields, motorboat windshields, shading plates for buses, side visors for automobiles, rear visors, head wings, headlight covers, automobile interior parts, or automobile exterior parts such as bumpers; electronic device parts such as acoustic video nameplates, stereo covers, television protection masks, vending machines, mobile phones, or personal computers; medical equipment such as incubators or X-ray parts; equipment related parts such as machine covers, instrument covers, experiment equipment, rulers, dials, or observation windows; parts for solar cells such as solar cell back films or front films for flexible solar cells; various household electric appliances; traffic related parts such as road signs, direction boards, traffic mirrors, or soundproof walls; decorative films serving also protective films provided on the surfaces of conservatories, large water tanks, box water tanks, watch panels, bathroom members such as bath tubs, plumbing parts, desk mats, play parts, toys, wallpapers, or face protection masks or the like used for welding.

[Examples]

Hereinafter, the present disclosure will be described in more detail with reference to examples and comparative examples. However, the present disclosure is not limited to the following examples but just to the appended claims. In the following descriptions, "part(s)" means "parts by mass" and "%" means "mass%", unless otherwise specified.

[Evaluation Items and Evaluation Methods]

Various evaluations were carried out by the following method.

(Glass transition temperature (Tg))

The "glass transition temperature (Tg) of a resin (composition)" was measured by the following method.
The glass transition temperature (Tg) of the resin (composition) was measured in accordance with JIS K 7121. Using a differential scanning calorimeter ("DSC-50" manufactured by Shimadzu Corporation), the temperature of the sample was raised to 230 °C and cooled to a room temperature, then a DSC curve was measured under the condition that the temperature was raised again from the room temperature to 230 °C at a heating rate of 10 °C/min. An intermediate point calculated from the obtained DSC curve is defined as the glass transition temperature (Tg). When a plurality of intermediate points appear in the range from a room temperature to 230 °C, the intermediate point derived from the resin having the highest content among the intermediate points was defined as the glass transition temperature (Tg).

(Thickness in TD direction)

The thickness in the TD direction (Traverse Direction) was measured by the method defined below.
The thickness of the film was determined by measuring the film at an interval of 1 mm in the width direction using an offline sheet thickness meter (TOF-4R052) manufactured by Yamabun Electronics Co., Ltd. An average value of all measured values was calculated, and the average value and standard deviation of the measured values were further calculated.

(Surface roughness Ra)

The surface roughness Ra of the thermoplastic resin multilayer film was measured by the method defined below.

[Surface roughness (surface smoothness)]

The thermoplastic resin multilayer film manufactured under the conditions described in the Examples was cut into squares each having a size of 5 mm × 5 mm to obtain a test piece. Using an atomic force microscope (SII NanoTechnology Inc.; SPI4000 probe station E-sweep environmental control unit) with a probe (SII Nanotechnology; SI-DF20 (back Al)), the shape of the surface was measured by a DFM mode. Prior to sample measurement, a reference sample with a pitch of 10 μm and a step of 100 nm was measured, and it was confirmed that a measurement error in the X axis and Y axis of the apparatus is 5% or less for 10 μm, and an error of the Z axis is 5% or less for 100 nm.
An observation area of the sample was in the range of 5 μm × 5 μm, and a measurement frequency was 0.5 Hz. The number of scan lines was 512 on the X axis and 512 on the Y axis. The measurement was performed in an atmospheric environment at 25 °C ± 2 °C and a humidity 30% ± 5%. The obtained measurement data was analyzed by data processing software attached to the apparatus, and the average surface roughness Ra was obtained. Specifically, the [Third-order tilt correction] command in the [Tool] menu in the measurement software of the apparatus was selected, the entire tilt of the film and large waviness were corrected, and then the [Surface roughness analysis] command in the [Analysis] menu was selected to obtain the average surface roughness Ra. The average surface roughness Ra is a value obtained by averaging the absolute values of deviations from the reference surface to the designated surface and is defined by the following Formula (7).
[Formula 1]

$$Ra = \frac{1}{S_0} \int_X \int_Y |F(X,Y) - Z_0| dXdY \qquad \cdots \quad (7)$$

Here, F (X, Y) represents a value of a height in the (X, Y) coordinates. Z0 represents an average value of Z data defined by the following Formula (8).
[Formula 2]

$$Z_0 = \frac{1}{S_0} \int_X \int_Y F(X,Y) dXdY \qquad \cdots \quad (8)$$

Further, S0 represents the area of the measurement region.
This average surface roughness Ra was measured at 10 different regions on both sides of the resin film (R) (for convenience, the sides of the resin film (R) shall be referred to as an A surface and a B surface, respectively), and a smaller value of the average surface roughness Ra at 10 positions on each of the A surface and B surface was defined as a roughness of the film surface.
In order to eliminate the influence of the tilt and waviness of the film sample, the surface of the measured sample was fitted with a three-dimensional surface by a least square approximation to correct the three-dimensional tilt.

(Light resistance test)

The thermoplastic resin multilayer film manufactured under the conditions described in the Examples was cut into squares each having a size of 50 mm × 50 mm to obtain a test piece, and an injection molded sheet made of an acrylic resin (manufactured by Kuraray Co., Ltd. HR 1000) having a thickness of 3 mm is overlapped on the test piece, an end part of the overlapped film and sheet are fixed with an adhesive tape to thereby obtain a laminated sheet. Using an SM color computer (manufactured by Suga Test Instruments Co., Ltd; M-4), the values of L, a, and b in the Lab color space on one surface of the test piece of the laminated sheet were measured.
Next, using a super UV testing machine (manufactured by Iwasaki Electric Co., Ltd.; SUV-W161), one surface of the test piece of the laminated sheet was irradiated with ultraviolet rays for 300 hours under the conditions of a black panel temperature of 83 °C, a relative humidity of 50%, and an irradiation energy of 100 mW/cm2. After that, the laminated sheet was removed from the testing machine, and the values of L, a, and b on one surface of the laminated sheet were measured in the same manner as described above.
Differences (ΔL, Δa, Δb) between the values of L, a, b before the UV irradiation and those after UV irradiation were calculated, and a color difference (ΔE) was calculated using the following Formula (9).

$$\Delta E = [(\Delta L)2 + (\Delta a)2 + (\Delta b)2]1/2 \qquad \dots (9)$$

[Bleed Out]

The resin film (R) manufactured under the conditions described in the Examples was cut into a size of 50 mm × 50 mm to obtain a test piece, which was left in an oven at 100 °C for 500 hours. The test piece was removed from the oven, and its surface condition was observed and evaluated according to the following evaluation criteria.

| Excellent: | Excellent surface condition with no bleeding out. |
| Poor: | Bleeding out occurred and whitening occurred. |

(Manufacture Example 1) Polymerization of acryl-based multilayer structure polymer particles (AX)

(1) 200 parts of deionized water, 1 part of sodium dodecylbenzenesulfonate, and 0.05 part of sodium carbonate were placed in a reactor equipped with a stirrer, a thermometer, a nitrogen gas introduction part, a monomer introduction pipe, and a reflux condenser, and then air inside the container was thoroughly substituted by a nitrogen gas to make the container substantially oxygen free, and then the internal temperature was set at 80 °C. Then, 0.01 part of potassium persulfate was added and stirred for 5 minutes. After the stirring, a monomer mixture consisting of 9.48 parts of methyl methacrylate, 0.5 part of n-butyl acrylate, and 0.02 part of allyl methacrylate was continuously dropped and fed over 20 minutes. After completion of the addition, the polymerization reaction was carried out for 30 minutes so that the polymerization rate became 98% or more.

(2) Next, 0.03 part of potassium persulfate was added into the same reactor and stirred for 5 minutes, then a monomer mixture consisting of 1.45 parts of methyl methacrylate, 27.67 parts of n-butyl acrylate, and 0.88 part of allyl methacrylate was continuously dropped and fed over 40 minutes. After the addition was completed, the polymerization reaction was carried out for 30 minutes so that the polymerization rate became 98% or more.

(3) Next, 0.06 part of potassium persulfate was charged into the same reactor and stirred for 5 minutes, then a monomer mixture including 53.73 parts of methyl methacrylate, 5.97 parts of n-butyl acrylate, and 0.3 parts of n-octyl mercaptan (chain transfer agent) was continuously dropped and fed over 100 minutes. After completion of the addition, a polymerization reaction was further carried out for 60 minutes so that the polymerization rate became 98% or more to thereby obtain a latex including the acryl-based multilayer structure polymer particles (AX-1). The average particle diameter was 0.09 $\mu$m.

Next, emulsion including the acryl-based multilayer structure polymer particles (AX-1) was frozen at -30 °C for 4 hours. The frozen emulsion was added to warm water at 80 °C, which is twice as much as the frozen latex, and dissolved to manufacture a slurry, which was then kept at 80 °C for 20 minutes. After that, the slurry was dehydrated and dried at 70 °C. In the manner described above, powdered acryl-based multilayer structure polymer particles (AX-1) having a three-layer structure were obtained and then pelletized.

(Example 1)

As raw materials, 88 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), and 2 mass% of a UV absorber "LA-31RG" manufactured by ADEKA Corporation were mixed and kneaded by a method using a twin screw extruder, so that a pellet-shaped thermoplastic resin (R1) was obtained.

Next, 87 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), 2 mass% of a UV absorber "LA-31RG" manufactured by ADEKA Corporation, 0.8 mass% of a light stabilizer "LA-57" manufactured by ADEKA Corporation, and 0.2 mass% of an antioxidant "AO-60" manufactured by ADEKA Corporation were mixed at this ratio and kneaded by a method using a twin screw extruder, so that a pellet-shaped thermoplastic resin (R2) was obtained.

First, the thermoplastic resins (R1) and (R2) made of a mixture of the above raw materials were charged into different single screw vent extruders, one having a screw diameter of 65 mm and the other having a screw diameter of 50 mm, respectively. Then, the resins were extruded from a multilayer structured T-die including a multi manifold by the co-extrusion method into a multilayer film shape having a constitution in which the thermoplastic resin (R2) is the outermost layer and the thermoplastic resin (R1) is the intermediate layer. The melt-extrusion condition were as follows.

Set temperature of extruder (melting temperature of resin): 260 °C, T-die width: 500 mm,
T-die lip opening: 0.8mm,
Discharge rate of molten resin from T-die: extruder with a screw diameter of 65 $\varphi$: 15 kg/h, and an extruder with a screw diameter of 50 mm: 10 kg/h.

Next, the melted product extruded into a film shape was pressurized and cooled using a cooling roller unit composed of first to fourth cooling rollers (nip rollers). A metallic elastic roller having temperature adjusted to 64 °C was used as the first cooling roller, and a metallic rigid roller having a temperature adjusted to 79°C was used as the second cooling roller. A metallic rigid roller having a temperature adjusted to 65 °C was used as the third cooling roller, and a metallic rigid roller having a temperature adjusted to 60 °C was used as the fourth cooling roller. The surface of each of the cooling rollers was a mirror surface. Further, the distance between the first and second cooling rollers and the distance between the third and fourth cooling rollers were set to 75 μm, and the linear pressure applied to the melted product applied by the pair of the first and second cooling rollers and the pair of the third and fourth cooling rollers were set to 30 kg/cm. The melted product was pressurized and cooled by the above cooling roller unit, and an unstretched thermoplastic resin multilayer film having a thickness of 52 μm (the ratio of the thicknesses of the three layers=1:3:1) was obtained. Various evaluations were made on the obtained thermoplastic resin multilayer film. Main manufacturing conditions and evaluation results are shown in Table 1, which will be described later.

(Example 2)

As raw materials, 87 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), and 3 mass% of a UV absorber "LA-31RG" manufactured by ADEKA Corporation were mixed at this ratio and kneaded by a method using a twin screw extruder, so that a pellet-shaped thermoplastic resin (R1) was obtained.

Next, 86 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), 3 mass% of a UV absorber "LA-31RG" manufactured by ADEKA Corporation, 0.7 mass% of a light stabilizer "LA-57" manufactured by ADEKA Corporation, and 0.3 mass% of an antioxidant "AO-60" manufactured by ADEKA Corporation were mixed at this ratio and kneaded by a method using a twin screw extruder, so that a pellet-shaped thermoplastic resin (R2) was obtained.

A thermoplastic resin multilayer film having a thickness of 52 μm was obtained in the same manner as in Example 1 except for the above (R1) and (R2). Main manufacturing conditions and evaluation results are shown in Table 1, which will be described later.

(Example 3)

As raw materials, 86 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), and 4 mass% of a UV absorber "LA-31RG" manufactured by ADEKA Corporation were mixed at this ratio and kneaded by a method using a twin screw extruder, so that a pellet-shaped thermoplastic resin (R1) was obtained.

Next, 85.5 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), 4 mass% of a UV absorber "LA-31RG" manufactured by ADEKA Corporation, 0.3 mass% of a light stabilizer "LA-57" manufactured by ADEKA Corporation, and 0.2 mass% of an antioxidant "AO-60" manufactured by ADEKA Corporation were mixed at this ratio and kneaded by a method using a twin screw extruder, so that a pellet-shaped thermoplastic resin (R2) was obtained.

A thermoplastic resin multilayer film having a thickness of 52 μm was obtained in the same manner as in Example 1 except for the above (R1) and (R2). Main manufacturing conditions and evaluation results are shown in Table 1, which will be described later.

(Example 4)

As raw materials, 85.8 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), 4 mass% of a UV absorber "LA-31RG" manufactured by ADEKA Corporation, 0.15 mass% of a light stabilizer "LA-57" manufactured by ADEKA Corporation, and 0.05 mass% of an antioxidant "AO-60" manufactured by ADEKA Corporation were mixed at this ratio and kneaded by using a twin screw extruder, so that a pellet-shaped thermoplastic resin (R2) was obtained.

A thermoplastic resin multilayer film having a thickness of 52 μm was obtained in the same manner as in Example 1 except for the above thermoplastic resin (R2). Main manufacturing conditions and evaluation results are shown in Table 1, which will be described later.

(Comparative Example 1)

A thermoplastic resin multilayer film having a thickness of 52 μm was obtained in a manner similar to Example 1 except that, as the thermoplastic resins (R1) and (R2), a thermoplastic resin in a pellet shape obtained by mixing 85 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), and 5 mass% of a UV absorber "LA-31RG" manufactured by ADEKA Corporation and kneading them by a method using a twin screw extruder was used. Main manufacturing conditions and evaluation results are shown in Table 2, which will be described later.

(Comparative Example 2)

As raw materials, 86 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), and 4 mass% of a UV absorber "LA-31RG" manufactured by ADEKA Corporation were mixed at this ratio and kneaded by a method using a twin screw extruder, so that a pellet-shaped thermoplastic resin (R1) was obtained.

Next, 85.9 mass% of the pellets of the acryl-based multilayer structure polymer particles (AX-1) obtained in Manufacture Example 1, 10 mass% of the methacryl-based resin (B-1) ("Parapet EH" manufactured by Kuraray Co., Ltd.), 4 mass% of a UV absorber "LA-31RG" manufactured by ADEKA Corporation, 0.08 mass% of a light stabilizer "LA-57" manufactured by ADEKA Corporation, and 0.02 mass% of an antioxidant "AO-60" manufactured by ADEKA Corporation were mixed at this ratio and kneaded by a method using a twin screw extruder, so that a pellet-shaped thermoplastic resin (R2) was obtained.

A thermoplastic resin multilayer film having a thickness of 52 $\mu$m was obtained in the same manner as in Example 1 except for the above thermoplastic resins (R1) and (R2). Main manufacturing conditions and evaluation results are shown in Table 2, which will be described later.

(Comparative Example 3)

A thermoplastic resin multilayer film having a thickness of 52 $\mu$m was obtained in a manner similar to Example 1 except that thermoplastic resins (R1) and (R2) similar to those used in Example 2 were used, a metallic elastic roller having temperature adjusted to 30 °C was used as the first cooling roller, and a metallic rigid roller having a temperature adjusted to 40 °C was used as the second cooling roller. Main manufacturing conditions and evaluation results are shown in Table 2, which will be described later.

(Comparative Example 4)

A thermoplastic resin multilayer film having a thickness of 52 $\mu$m was obtained in a manner similar to Example 1 except that thermoplastic resins (R1) and (R2) similar to those used in Example 2 were used, the first roller among the first to fourth cooling rollers was removed, and a method of directly casting the film on the second roller was used. Main manufacturing conditions and evaluation results are shown in Table 2, which will be described later.

[Table 1]

| | | | Multilayer | | | |
|---|---|---|---|---|---|---|
| | | | Example 1 | Example 2 | Example 3 | Example 4 |
| Surface Layer | Thermoplastic Resin (R1) (wt%) | | | | | |
| | | Acrylic-Based Multilayer Structure Particle (AX-1) | 88 | 87 | 86 | 86 |
| | | Methacryl-Based Resin (B) | 10 | 10 | 10 | 10 |
| | | Ultraviolet Absorber Content | 2 | 3 | 4 | 4 |
| | Glass Transition Temperature of Surface Layer: TgR1 (°C) | | 104 | 102 | 102 | 102 |
| Intermediate Layer | Thermoplastic Resin (R2) (wt%) | | | | | |
| | | Acrylic-Based Multilayer Structure Particle (AX-1) | 86.9 | 86.3 | 85.6 | 85.8 |
| | | Methacryl-Based Resin (B) | 10 | 10 | 10 | 10 |
| | | Ultraviolet Absorber Content | 2 | 3 | 4 | 4 |
| | | Light Stabilizer Content | 0.8 | 0.5 | 0.3 | 0.15 |
| | | Antioxidant Content | 0.3 | 0.2 | 0.1 | 0.05 |
| Standard Deviation σ of TD Direction Thickness (TD Direction Thickness) | | | 0.002 | 0.0025 | 0.0025 | 0.0021 |
| Average Value Ave in TD Direction Thickness (TD Direction Thickness mm) | | | 0.052 | 0.052 | 0.052 | 0.052 |
| Formula (1) : (σ(TD Direction Thickness)÷Ave (TD Direction Thickness))/100 | | | 3.8% | 4.8% | 4.8% | 4.0% |
| First Roller | Type | | Elastic Roller | Elastic Roller | Elastic Roller | Elastic Roller |
| | Surface Temperature (T1) | | 60 | 60 | 60 | 60 |
| Second Roller | Type | | Rigid Roller | Rigid Roller | Rigid Roller | Rigid Roller |
| | Surface Temperature (T2) | | 70 | 70 | 70 | 70 |
| Ra (Sheet) :μm of Sheet Surface Contacting Second Roller | | | 0.011 | 0.012 | 0.012 | 0.013 |
| Formula (2) : TgR1-T2 | | | 34 | 32 | 32 | 32 |
| Light Resistance Test (Tested 1000 h by Super UV) | | | | | | |
| | Sheet Surface Cracking | | None | None | None | None |
| | Sheet Whitening | | None | None | None | None |
| | Sheet Yellowing | | None | None | None | None |
| Bleed Out Test (Left at 80 °C for 1 week) | | | | | | |
| | Dirt and Stickiness on Sheet Surface Layer | | None | None | None | None |
| Dirt on Cooling Roller When Molding | | | None | None | None | None |

[Table 2]

| | | Multilayer | | | |
|---|---|---|---|---|---|
| | | Comparative Example 1 | Comparative Example 2 | Comparative Example 3 | Comparative Example 4 |
| Surface Layer | Thermoplastic Resin (R1) (wt%) | | | | |
| | Acrylic-Based Multilayer Structure Particle (AX-1) | 85 | 86 | 87 | 87 |
| | Methacryl-Based Resin (B) | 10 | 10 | 10 | 10 |
| | Ultraviolet Absorber Content | 5 | 4 | 3 | 3 |
| | Glass Transition Temperature of Surface Layer: TgR1 (°C) | 100 | 102 | 102 | 102 |
| Intermediate Layer | Thermoplastic Resin (R2) (wt%) | | | | |
| | Acrylic-Based Multilayer Structure Particle (AX-1) | 85 | 85.9 | 86.3 | 86.3 |
| | Methacryl-Based Resin (B) | 10 | 10 | 10 | 10 |
| | Ultraviolet Absorber Content | 5 | 4 | 3 | 3 |
| | Light Stabilizer Content | - | 0.08 | 0.5 | 0.5 |
| | Antioxidant Content | - | 0.02 | 0.2 | 0.2 |
| Standard Deviation σ of TD Direction Thickness (TD Direction Thickness) | | 0.0025 | 0.0021 | 0.0031 | 0.005 |
| Average Value Ave in TD Direction Thickness (TD Direction Thickness mm) | | 0.052 | 0.052 | 0.052 | 0.052 |
| Formula (1) : (σ(TD Direction Thickness)÷Ave (TD Direction Thickness))/100 | | 4.8% | 4.0% | 6.0% | 9.6% |
| First Roller | Type | Elastic Roller | Elastic Roller | Elastic Roller | None (Casting Method) |
| | Surface Temperature (T1) | 60 | 60 | 30 | — |
| Second Roller | Type | Rigid Roller | Rigid Roller | Rigid Roller | Rigid Roller |
| | Surface Temperature (T2) | 70 | 70 | 40 | 70 |
| Ra (Sheet) :μm of Sheet Surface Contacting Second Roller | | 0.012 | 0.013 | 0.029 | 0.035 |
| Formula (2) : TgR1-T2 | | 30 | 32 | 62 | 32 |
| Light Resistance Test (Tested 1000 h by Super UV) | | | | | |
| | Sheet Surface Cracking | None | None | None | None |
| | Sheet Whitening | None | Little Observed | None | None |
| | Sheet Yellowing | None | Many Observed | None | None |
| Bleed Out Test (Left at 80 °C for 1 week) | | | | | |
| | Dirt and Stickiness on Sheet Surface Layer | Many Observed | None | None | None |
| Dirt on Cooling Roller When Molding | | Many Observed | None | Many Observed | Many Observed |

In Examples 1 to 4, the thermoplastic resin (R1) including an ultraviolet absorber was used as the resin constituting the front and rear outermost surface layers of the thermoplastic resin multilayer film, and the thermoplastic resin (R2) including an ultraviolet absorber, a light stabilizer, and an antioxidant was used as the resin constituting the intermediate layer.

In Examples 1 to 4, the above thermoplastic resins (R1) and (R2) were melted and extruded from a T-die by the co-extrusion method, the melted product extruded into a film shape was sandwiched between a pair of cooling rollers (first cooling roller and second cooling roller), in which both of the cooling rollers were metallic rigid rollers or one of them was a metallic rigid roller and the other was a metallic elastic roller to thereby manufacture a thermoplastic resin multilayer film.

In Examples 1 to 4, a thermoplastic resin multilayer film satisfying the above Formulas (1) and (2) was obtained, results showing no cracking, whitening, and yellowing of the sheet surface in a light resistance test were obtained, and there was no stickiness of the sheet surface layer in a bleed out test. Further, the first cooling roller and the second cooling roller were not contaminated by the additive component included in the thermoplastic resin during continuous film formation, and good continuous film formation was always possible.

On the other hand, Comparative Example 1 in which only the content of the UV absorber was increased in order to improve the light resistance performance had results showing no cracking, whitening, and yellowing of the sheet surface. However, there was stickiness of the surface in a bleed out test, and the first cooling roller and the second cooling roller were soiled with a white matter by the ultraviolet absorber included in the thermoplastic resin, which makes stable and continuous film formation difficult.

In Comparative Example 2 in which the contents of the light stabilizer and the antioxidant in the intermediate layer were reduced compared with Examples 3 and 4, no bleeding out was observed, the first cooling roller and the second cooling roller were not soiled, and stable and continuous film formation was possible. However, whitening and yellowing of the sheet surface were observed in a light resistance test. Thus, the light resistance performance in Comparative Example 2 was inferior to that in Examples 3 and 4.

Compared with Example 2, Comparative Example 3 in which the first cooling roller temperature and the second cooling roller temperature were lowered to produce the thermoplastic resin multilayer film had the favorable results in the light resistance test and a test about whether stickiness due to bleeding out occurred equivalent to those of Example 2. However, since the cooling roller temperature at the time of film manufacture was too low to uniformly nip the film without a gap between the first roller and the second roller, the film with a high surface roughness was obtained. In addition, since the film was not uniformly nipped, a thin air layer was disposed between the rollers and the film, which made it easy for the additive component included in the thermoplastic resin to be aggregated on the roller surfaces, so that the surfaces of the first cooling roller and the second cooling roller were gradually soiled with a white matter over time during film formation.

Thus, the continuous film formation property in Comparative Example 3 was inferior to that in Example 2.

Compared with Example 2, Comparative Example 4 in which the first cooling roller is removed and a film was casted on the second cooling roller to form a laminated film, like in Comparative Example 3, had the favorable results in the light resistance result and a test about whether stickiness due to bleeding out occurred equivalent to those of Example 2. However, since the adherence of the film to the second roller was not sufficient, a film with a high surface roughness was obtained, which caused the second roller to be soiled with a white matter over time. Thus, the continuous film formation property in Comparative Example 4 was inferior to that in Example 2.

Note that the present disclosure is not limited to the above-described embodiment, and can be changed as appropriate within the scope of the claims. For example, in the above-described embodiment, an example in which the thermoplastic resin multilayer film is composed of three layers of the outermost surface layer 11, the intermediate layer 12, and the outermost surface layer 13 is described. However, the thermoplastic resin multilayer film may be composed of four or more layers. For example, the thermoplastic resin multilayer film may include a thermoplastic resin layer having another composition between the outermost surface layer 11 and the intermediate layer 12. Likewise, the thermoplastic resin multilayer film may include a thermoplastic resin layer having another composition between the outermost surface layer 13 and the intermediate layer 12.

**Reference Signs List**

| | |
|---|---|
| 10, 300 | THERMOPLASTIC RESIN MULTILAYER FILM |
| 11, 13 | OUTERMOST SURFACE LAYER |
| 12 | INTERMEDIATE LAYER |
| 100 | FILM MANUFACTURING APPARATUS |
| 110 | EXTRUSION MOLDING MEANS |
| 111, 113 | RAW MATERIAL CHARGING UNIT |
| 112, 114 | SCREW UNIT |
| 115 | T-DIE |
| 115A | DISCHARGE PORT |
| 116 | SPACE |
| 120 | COOLING ROLLER UNIT |
| 121 | FIRST COOLING ROLLER |
| 122 | SECOND COOLING ROLLER |
| 123 | THIRD COOLING ROLLER |
| 124 | FOURTH COOLING ROLLER |
| 220 | RESIN FILM |
| 210M, 211M | RESIN (COMPOSITION) |
| 310 | FIRST MANUFACTURING ROOM |
| 320 | SECOND MANUFACTURING ROOM |

**Claims**

1. A thermoplastic resin multilayer film (10) comprising:

   two outermost surface layers (11,13) composed of a thermoplastic resin (R1) including acryl-based multilayer structure polymer particles (A); and
   an intermediate layer (12) composed of a thermoplastic resin (R2) including the acryl-based multilayer structure polymer particles (A) and being laminated between the two outermost surface layers (11,13), wherein
   the thermoplastic resin (R1) includes 2.0 parts by mass or more and 4.0 parts by mass or less of an ultraviolet absorber with respect to 100 parts by mass of the thermoplastic resin,
   the thermoplastic resin (R2) includes an antioxidant and a light stabilizer,
   a sum of a content of the antioxidant and a content of the light stabilizer is 0.2 parts by mass or more with respect to 100 parts by mass of the thermoplastic resin (R2), and
   a surface roughness Ra of at least one of the outermost surface layers (11,13) is 0.025 $\mu$m or less.

2. The thermoplastic resin multilayer film (10) according to Claim 1, wherein the acryl-based multilayer structure polymer particles (A) comprise:

at least one inner layer including a crosslinked elastic polymer layer with a monomer unit being at least one of a conjugated diene-based and an acrylic acid alkyl ester including an alkyl group carbon number of 1 to 8; and an outermost layer including a thermoplastic polymer layer with a monomer unit being an methacrylic acid alkyl ester including an alkyl group carbon number of 1 to 8.

3. The thermoplastic resin multilayer film (10) according to Claim 2, wherein a particle diameter of the acryl-based multilayer structure polymer particle (A) is 0.05 $\mu$m or more and 0.20 $\mu$m or less.

4. The thermoplastic resin multilayer film (10) according to any one of Claims 1 to 3, wherein the thermoplastic resin (R1) or (R2) includes 80 mass% or more of methyl methacrylate units and a methacryl-based resin (B) with a weight average molecular weight of 50,000 or more and 200,000 or less.

5. The thermoplastic resin multilayer film (10) according to Claim 1, wherein the thermoplastic resin multilayer film (10) satisfies a Formula (1) shown below.

$0 \leq$ (a standard deviation of a thickness in a TD direction + an average value of the thickness in the TD direction) $\times 100 \leq 5$     (1)

6. The thermoplastic resin multilayer film (10) according to Claim 1, wherein a thickness of the thermoplastic resin multilayer film (10) is 10 $\mu$m or more and 250 $\mu$m or less.

7. The thermoplastic resin multilayer film (10) according to any one of Claims 1 to 6, wherein a matting agent is blended in a thermoplastic resin constituting at least one of film surfaces.

8. The thermoplastic resin multilayer film (10) according to any one of Claims 1 to 7, wherein at least one of the film surfaces is printed.

9. The thermoplastic resin multilayer film (10) according to any one of Claims 1 to 8, wherein another thermoplastic resin film is laminated on at least one of the film surfaces.

10. The thermoplastic resin multilayer film (10) according to any one of Claims 1 to 9, wherein the thermoplastic resin multilayer film (10) is a decorating film.

11. The thermoplastic resin multilayer film (10) according to any one of Claims 1 to 9, wherein the thermoplastic resin multilayer film (10) is a film for building materials.

12. A laminated body comprising the thermoplastic resin multilayer film (10) according to any one of Claims 1 to 11 laminated on a substrate.

13. A method of manufacturing the thermoplastic resin multilayer film (10) according to any one of Claims 1 to 11, the method comprising:

a step of melting a thermoplastic resin and extruding the thermoplastic resin into a multilayer film shape by a co-extrusion method from one T-die (115) using a plurality of extruders for melting and extruding the thermoplastic resin; and
a step of sandwiching a melted product extruded into the film shape between at least two or more cooling rollers (121, 122, 123, 124).

14. The method according to Claim 13, wherein a pair of the cooling rollers (121, 122, 123, 124) that sandwich the melted product are metallic rigid rollers among the cooling rollers (121, 122, 123, 124), wherein the metallic rigid rollers do not deform even when the melted product is pressurized while the film is being manufactured.

15. The method according to Claim 13, wherein one of the cooling rollers (121, 122, 123, 124) for sandwiching the melted product is a metallic rigid roller that does not deform even when the melted product is pressurized while the film is being manufactured and another one of the cooling rollers (121, 122, 123, 124) for sandwiching the melted product is a metallic elastic roller having a surface that is elastically deformable while the film is being manufactured.

**16.** The method according to Claim 13, wherein

a Formula (2) shown below is satisfied, and
in the Formula (2), Ra (Sheet) is a surface roughness of one of the two outermost surface layers (11, 13) of the thermoplastic resin multilayer film (10), which is brought into contact with the cooling roller (121, 122, 123, 124) for a longer time than the other outermost surface layer to be molded is, and Ra (Roll) is a surface roughness of the cooling roller (121, 122, 123, 124).

$$0 \leq |Ra(Sheet) - Ra(Roll)| \leq 0.005 \ldots (2)$$

**17.** The method according to any one of Claims 13 to 16, wherein

Formulas (3) and (4) shown below are satisfied, and
in the Formulas (3) and (4), T1 is a surface temperature of a first cooling roller that is located at an upstream side between the pair of cooling rollers (121, 122, 123, 124), T2 is a surface temperature of a second cooling roller that is located after the first cooling roller at the upstream side between the pair of cooling rollers (121, 122, 123, 124), and TgR1 is a glass transition temperature of the thermoplastic resin (R1).

$$T2 \geq T1 \ldots (3)$$

$$0 \leq TgR1 - T2 \leq 60 \ldots (4)$$

**Patentansprüche**

**1.** Thermoplastische Harz-Mehrschichtfolie (10), umfassend:

zwei äußerste Oberflächenschichten (11, 13), die aus einem thermoplastischen Harz (R1) bestehen, das auf Acryl basierende Mehrschichtstruktur-Polymerteilchen (A) enthält; und
eine Zwischenschicht (12), die aus einem thermoplastischen Harz (R2) besteht, das die auf Acryl basierende Mehrschichtstruktur-Polymerteilchen (A) enthält und zwischen die zwei äußersten Oberflächenschichten (11, 13) laminiert ist, wobei das thermoplastische Harz (R1) 2,0 Massenteile oder mehr und 4,0 Massenteile oder weniger eines Ultraviolettabsorbers, bezogen auf 100 Massenteile des thermoplastischen Harzes, enthält, das thermoplastische Harz (R2) ein Antioxidationsmittel und einen Lichtstabilisator enthält, die Summe des Gehalts von dem Antioxidationsmittel und des Gehalts von dem Lichtstabilisator 0,2 Massenteile oder mehr, bezogen auf 100 Massenteile des thermoplastischen Harzes (R2), beträgt, und eine Oberflächenrauheit Ra von mindestens einer der äußersten Oberflächenschichten (11, 13) 0,025 $\mu$m oder weniger beträgt.

**2.** Thermoplastische Harz-Mehrschichtfolie (10) nach Anspruch 1, wobei die auf Acryl basierende Mehrschichtstruktur-Polymerteilchen (A) umfassen:

mindestens eine innere Schicht, die eine vernetzte elastische Polymerschicht mit einer Monomereinheit, die mindestens eine von einer konjugierten Dienbasierenden Monomereinheit und einer Acrylsäurealkylester-Monomereinheit einschließlich einer Alkylgruppenkohlenstoffzahl von 1 bis 8 ist, enthält; und
eine äußerste Schicht, die eine thermoplastische Polymerschicht mit einer Monomereinheit, die ein Methacrylsäurealkylester einschließlich einer Alkylgruppenkohlenstoffzahl von 1 bis 8 ist, enthält.

**3.** Thermoplastische Harz-Mehrschichtfolie (10) nach Anspruch 2, wobei ein Teilchendurchmesser des auf Acryl basierenden Mehrschichtstruktur-Polymerteilchens (A) 0,05 $\mu$m oder mehr und 0,20 $\mu$m oder weniger beträgt.

**4.** Thermoplastische Harz-Mehrschichtfolie (10) nach einem der Ansprüche 1 bis 3, wobei das thermoplastische Harz (R1) oder (R2) 80 Massen-% oder mehr Methylmethacrylat-Einheiten und ein auf Methacryl basierendes Harz (B) mit einem gewichtsgemittelten Molekulargewichts von 50.000 oder mehr und 200.000 oder weniger enthält.

**5.** Thermoplastische Harz-Mehrschichtfolie (10) nach Anspruch 1, wobei die thermoplastische Harz-Mehrschichtfolie (10) eine nachstehend gezeigte Formel (1) erfüllt.

$0\leq$(eine Standardabweichung einer Dicke in einer TD-Richtung $\div$ ein Durchschnittswert der Dicke in der TD-Richtung) $\times 100 \leq 5$     (1)

6. Thermoplastische Harz-Mehrschichtfolie (10) nach Anspruch 1, wobei die Dicke der thermoplastischen Harz-Mehrschichtfolie (10) 10 $\mu$m oder mehr und 250 $\mu$m oder weniger beträgt.

7. Thermoplastische Harz-Mehrschichtfolie (10) nach einem der Ansprüche 1 bis 6, wobei ein Mattierungsagenz in ein thermoplastisches Harz, das mindestens eine der Folienoberflächen bildet, eingemischt ist.

8. Thermoplastische Harz-Mehrschichtfolie (10) nach einem der Ansprüche 1 bis 7, wobei mindestens eine der Folienoberflächen bedruckt ist.

9. Thermoplastische Harz-Mehrschichtfolie (10) nach einem der Ansprüche 1 bis 8, wobei eine weitere thermoplastische Harzfolie auf mindestens eine der Folienoberflächen laminiert ist.

10. Thermoplastische Harz-Mehrschichtfolie (10) nach einem der Ansprüche 1 bis 9, wobei die thermoplastische Harz-Mehrschichtfolie (10) eine Dekorationsfolie ist.

11. Thermoplastische Harz-Mehrschichtfolie (10) nach einem der Ansprüche 1 bis 9, wobei die thermoplastische Harz-Mehrschichtfolie (10) eine Folie für Baumaterialien ist.

12. Laminierter Körper, umfassend die thermoplastische Harz-Mehrschichtfolie (10) nach einem der Ansprüche 1 bis 11, laminiert auf einem Substrat.

13. Verfahren zur Herstellung der thermoplastischen Harz-Mehrschichtfolie (10) nach einem der Ansprüche 1 bis 11, wobei das Verfahren umfasst:

    einen Schritt des Schmelzens eines thermoplastischen Harzes und Extrudierens des thermoplastischen Harzes in eine Mehrschicht-Folienform durch ein Co-Extrusionsverfahren aus einer T-Düse (115) unter Verwendung einer Vielzahl von Extrudern zum Schmelzen und Extrudieren des thermoplastischen Harzes, und
    einen Schritt des Einbettens eines geschmolzenen Produkts, das in die Folienform extrudiert wurde, zwischen mindestens zwei oder mehr Kühlwalzen (121, 122, 123, 124).

14. Verfahren nach Anspruch 13, wobei ein Paar der Kühlwalzen (121, 122, 123, 124), die das geschmolzene Produkt einbetten, metallische starre Walzen unter den Kühlwalzen (121, 122, 123, 124) sind, wobei die metallischen starren Walzen sich nicht verformen, selbst wenn das geschmolzene Produkt während des Herstellens der Folie unter Druck gesetzt wird.

15. Verfahren nach Anspruch 13, wobei eine der Kühlwalzen (121, 122, 123, 124) zum Einbetten des geschmolzenen Produkts eine metallische starre Walze ist, die sich nicht verformt, selbst wenn das geschmolzene Produkt während des Herstellens der Folie unter Druck gesetzt wird, und eine andere der Kühlwalzen (121, 122, 123, 124) zum Einbetten des geschmolzenen Produkts eine metallische elastische Walze mit einer Oberfläche, die während des Herstellens der Folie elastisch verformbar ist, ist.

16. Verfahren nach Anspruch 13, wobei

    eine nachstehend gezeigte Formel (2) erfüllt ist, und
    in der Formel (2), Ra (Platte) eine Oberflächenrauheit von einer der zwei äußersten Oberflächenschichten (11, 13) der thermoplastischen Harz-Mehrschichtfolie (10) ist, die mit der Kühlwalze (121, 122, 123, 124) für einen längeren Zeitraum in Kontakt gebracht wird als die andere zu formende äußerste Oberflächenschicht, und Ra (Rolle) eine Oberflächenrauheit der Kühlwalze (121, 122, 123, 124) ist.

$$0 \leq |Ra(Platte) - Ra(Rolle)| \leq 0,005 ...(2)$$

**17.** Verfahren nach einem der Ansprüche 13 bis 16, wobei

die nachstehend gezeigten Formeln (3) und (4) erfüllt sind, und
in den Formeln (3) und (4), T1 eine Oberflächentemperatur einer ersten Kühlwalze ist, die an einer Stromaufwärtsseite zwischen dem Paar von Kühlwalzen (121, 122, 123, 124) angeordnet ist, T2 eine Oberflächentemperatur einer zweiten Kühlwalze ist, die nach der ersten Kühlwalze an der Stromaufwärtsseite zwischen dem Paar von Kühlwalzen (121, 122, 123, 124) angeordnet ist, und TgR1 eine Glasübergangstemperatur des thermoplastischen Harzes (R1) ist.

$$T2 \geq T1 ...(3)$$

$$0 \leq TgR1 - T2 \leq 60 ...(4)$$

**Revendications**

**1.** Film multicouche de résine thermoplastique (10) comprenant :

deux couches de surface externes (11, 13) composées d'une résine thermoplastique (R1) incluant des particules polymères de structure multicouche à base d'acryle (A) ; et
une couche intermédiaire (12) composée d'une résine thermoplastique (R2) incluant les particules polymères de structure multicouche à base d'acryle (A) et qui est stratifiée entre les deux couches de surface externes (11, 13),
dans lequel la résine thermoplastique (R1) inclut 2,0 parties en masse ou plus et 4,0 parties en masse ou moins d'un absorbant d'ultraviolet par rapport à 100 parties en masse de la résine thermoplastique,
la résine thermoplastique (R2) inclut un antioxydant et un photostabilisant,
une somme d'une teneur en l'antioxydant et d'une teneur en le photostabilisant est de 0,2 partie en masse ou plus par rapport à 100 parties en masse de la résine thermoplastique (R2), et
une rugosité superficielle Ra d'au moins une des couches de surface externes (11, 13) est de 0,025 $\mu$m ou moins.

**2.** Film multicouche de résine thermoplastique (10) selon la revendication 1, dans lequel les particules polymères de structure multicouche à base d'acryle (A) comprennent :

au moins une couche interne incluant une couche polymère élastique réticulée avec une unité monomère qui est au moins un d'un à base de diène conjugué et d'un ester alkylique d'acide acrylique incluant un nombre de carbones de groupe alkyle de 1 à 8 ; et
une couche externe incluant une couche polymère thermoplastique avec une unité monomère qui est un ester alkylique d'acide méthacrylique incluant un nombre de carbones de groupe alkyle de 1 à 8.

**3.** Film multicouche de résine thermoplastique (10) selon la revendication 2, dans lequel un diamètre particulaire des particules polymères de structure multicouche à base d'acryle (A) est de 0,05 $\mu$m ou plus et 0,20 $\mu$m ou moins.

**4.** Film multicouche de résine thermoplastique (10) selon l'une quelconque des revendications 1 à 3, dans lequel la résine thermoplastique (R1) ou (R2) inclut 80 % en masse ou plus d'unités de méthacrylate de méthyle et une résine à base de méthacryle (B) avec un poids moléculaire moyen en poids de 50 000 ou plus et 200 000 ou moins.

**5.** Film multicouche de résine thermoplastique (10) selon la revendication 1, dans lequel le film multicouche de résine thermoplastique (10) satisfait une Formule (1) illustrée ci-dessous.

0≤(un écart-type d'une épaisseur dans une direction TD + une valeur moyenne de l'épaisseur dans la di-rection TD) x100≤5    (1)

**6.** Film multicouche de résine thermoplastique (10) selon la revendication 1, dans lequel une épaisseur du film multicouche de résine thermoplastique (10) est de 10 $\mu$m ou plus et 250 $\mu$m ou moins.

**7.** Film multicouche de résine thermoplastique (10) selon l'une quelconque des revendications 1 à 6, dans lequel un agent de matité est mélangé dans la résine thermoplastique constituant au moins une de surfaces de film.

8.  Film multicouche de résine thermoplastique (10) selon l'une quelconque des revendications 1 à 7, dans lequel au moins une des surfaces de film est imprimée.

9.  Film multicouche de résine thermoplastique (10) selon l'une quelconque des revendications 1 à 8, dans lequel un autre film de résine thermoplastique est stratifié sur au moins une des surfaces de film.

10. Film multicouche de résine thermoplastique (10) selon l'une quelconque des revendications 1 à 9, dans lequel le film multicouche de résine thermoplastique (10) est un film décoratif.

11. Film multicouche de résine thermoplastique (10) selon l'une quelconque des revendications 1 à 9, dans lequel le film multicouche de résine thermoplastique (10) est un film pour matériaux de construction.

12. Corps stratifié comprenant le film multicouche de résine thermoplastique (10) selon l'une quelconque des revendications 1 à 11 stratifié sur un substrat.

13. Procédé de fabrication du film multicouche de résine thermoplastique (10) selon l'une quelconque des revendications 1 à 11, le procédé comprenant :

    une étape de fonte d'une résine thermoplastique et d'extrusion de la résine thermoplastique en une forme de film multicouche par un procédé de co-extrusion à partir d'une filière en T (115) en utilisant une pluralité d'extrudeuses pour faire fondre et extruder la résine thermoplastique ; et
    une étape de mise en sandwich d'un produit fondu extrudé en la forme de film entre au moins deux rouleaux de refroidissement (121, 122, 123, 124) ou plus.

14. Procédé selon la revendication 13, dans lequel une paire des rouleaux de refroidissement (121, 122, 123, 124) qui mettent en sandwich le produit fondu sont des rouleaux rigides métalliques parmi les rouleaux de refroidissement (121, 122, 123, 124), dans lequel les rouleaux rigides métalliques ne se déforment pas même lorsque le produit fondu est pressurisé tandis que le film est fabriqué.

15. Procédé selon la revendication 13, dans lequel un des rouleaux de refroidissement (121, 122, 123, 124) pour mettre en sandwich le produit fondu est un rouleau rigide métallique qui ne se déforme pas même lorsque le produit fondu est pressurisé tandis que le film est fabriqué et un autre des rouleaux de refroidissement (121, 122, 123, 124) pour mettre en sandwich le produit fondu est un rouleau élastique métallique ayant une surface qui est élastiquement déformable tandis que le film est fabriqué.

16. Procédé selon la revendication 13, dans lequel

    une Formule (2) illustrée ci-dessous est satisfaite, et
    dans la Formule (2), Ra (Feuille) est une rugosité de surface d'une des deux couches de surface externes (11, 13) du film multicouche de résine thermoplastique (10), qui est amenée en contact avec le rouleau de refroidissement (121, 122, 123, 124) pendant une durée plus longue que l'autre couche de surface externe devant être moulée, et Ra (Rouleau) est une rugosité de surface du rouleau de refroidissement (121, 122, 123, 124).

$$0 \leq |\mathrm{Ra(Feuille)}-\mathrm{Ra(Rouleau)}| \leq 0{,}005 \quad (2)$$

17. Procédé selon l'une quelconque des revendications 13 à 16, dans lequel

    les Formules (3) et (4) illustrées ci-dessous sont satisfaites, et
    dans les Formules (3) et (4), T1 est une température de surface d'un premier rouleau de refroidissement qui est situé sur un côté amont entre la paire de rouleaux de refroidissement (121, 122, 123, 124), T2 est une température de surface d'un second rouleau de refroidissement qui est situé après le premier rouleau de refroidissement sur le côté amont entre la paire de rouleaux de refroidissement (121, 122, 123, 124), et TgR1 est une température de transition vitreuse de la résine thermoplastique (R1).

$$T2 \geq T1 \qquad (3)$$

$$0 \leq TgR1 - T2 \leq 60 \qquad (4)$$

<u>10</u>

Fig. 1

Fig. 2

EP 3 616 910 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009520859 W
- JP 2008093921 A
- JP 2012003281 A
- JP 2009298124 A
- JP 2015066896 A
- US 2008281023 A1
- TW 201213128 A